(19) Europäisches Patentamt
European Patent Office
Office européen des brevets

(11) **EP 1 835 632 A1**

(12) **EUROPEAN PATENT APPLICATION**
published in accordance with Art. 158(3) EPC

(43) Date of publication:
**19.09.2007 Bulletin 2007/38**

(51) Int Cl.:
*H04B 1/707* (2006.01)    *G01S 5/14* (2006.01)

(21) Application number: **05819833.4**

(22) Date of filing: **20.12.2005**

(86) International application number:
**PCT/JP2005/023361**

(87) International publication number:
**WO 2006/070642 (06.07.2006 Gazette 2006/27)**

(84) Designated Contracting States:
**GB**

(30) Priority: **28.12.2004 JP 2004378535**

(71) Applicant: **MATSUSHITA ELECTRIC INDUSTRIAL CO., LTD.**
**Osaka 571-8501 (JP)**

(72) Inventors:
• **ENDOH, Tokio,**
**Matsushita Electric Industrial Co.,Ltd.**
**3-7-Shiromi 1 chome,ChuoKu,Osaka-shi,**
**Osaka 540-6319 (JP)**

• **HANABUSA, Mikio,**
**Matsushita Electric Industrial Co.,Ltd.**
**3-7-Shiromi 1 chome,ChuoKu,Osaka-shi,**
**Osaka 540-6319 (JP)**

(74) Representative: **Keck, Stephan**
**Eisenführ, Speiser & Partner**
**Patentanwälte Rechtsanwälte**
**Postfach 10 60 78**
**28060 Bremen (DE)**

(54) **SPECTRUM SPREAD RECEIVING APPARATUS**

(57)    In a spread spectrum receiver apparatus, frequency converters (201-1 and 201-2) convert two radio signals spread-spectrum modulated according to a spreading code and having carrier frequencies different from each other, into intermediate frequency signals having a substantially identical intermediate frequency, and outputs the intermediate frequency signals. An adder (102) adds up the two intermediate frequency signals outputted from the respective frequency converters (201-1 and 201-2), and outputs an intermediate frequency signal combined as a result of addition to a receiving processor (104) via an analog signal processor (103) and an A/D converter (117). The receiving processor (104) despreads digital signals included in the two respective radio signals using the spreading code based on a digital signal from the A/D converter (117), to demodulate the digital signal to digital data and output the digital data.

*Fig.12*

**Description**

TECHNICAL FIELD

The present invention relates to a spread spectrum receiver apparatus, and a position detector apparatus and a transport apparatus each using the spread spectrum receiver apparatus. The present invention particularly relates to a spread spectrum receiver apparatus for simultaneously receiving multi-frequency signals such as those in an L1 spectrum (1575.42 MHz) and an L2 (1227.6 MHz) spectrum for a global positioning system (referred to as a GPS hereinafter), and a position detector apparatus and a transport apparatus each using the spread spectrum receiver apparatus.

PRIOR ART

A GPS, which is a satellite system developed in the United States, can receive orbital information from four or more satellites among 24 satellites and acquire geographical position information. In 1993, commercial use of an L1 spectrum using spectrum spreading by a C/A code (Gaarse/Acquisitian Code) started, and the L1 spectrum is currently used for many purposes such as car navigation and measurement. Although it is the L1 spectrum using the C/A code spectrum that is commercially available, it is expected in the future to additionally use second and third frequencies for commercial purposes and to realize a receiver apparatus capable of high-accuracy positioning.

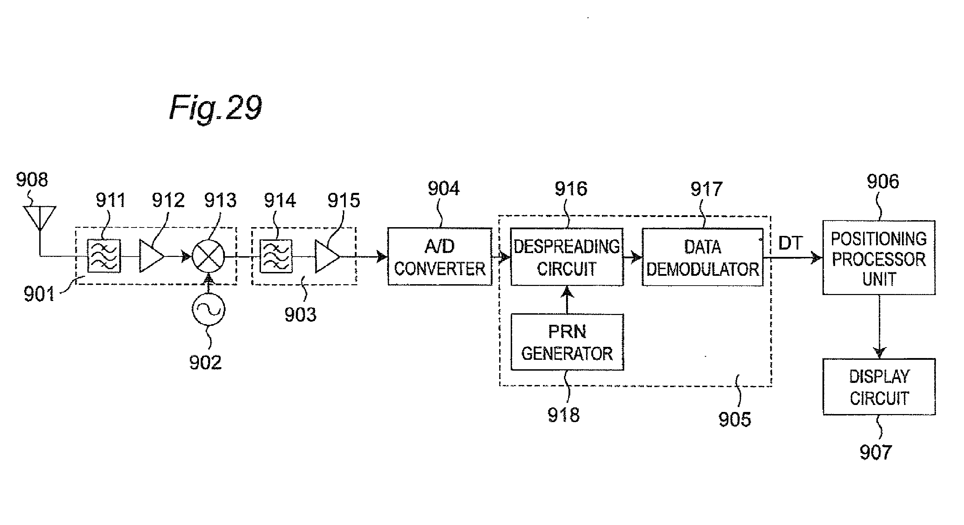

Fig. 29 is a block diagram showing a configuration of a spread spectrum receiver apparatus according to a prior art and showing an example of a single-frequency GPS receiver apparatus using spread spectrum modulation.

Referring to Fig. 29, a GPS signal received by an antenna 908 from each satellite is converted into an intermediate frequency signal having an intermediate frequency by a frequency converter 901, and the intermediate frequency signal is outputted. The frequency converter 901 is configured to include, for example, a band-pass filter 911 that band-pass-filters only a desired frequency component, a high frequency amplifier 912 that amplifies the signal band-pass-filtered by the band-pass filter 911, a local oscillator 902 that generates a local oscillation signal, and a mixer 913 that mixes and multiple the signal outputted from the intermediate frequency amplifier 912 by the local oscillation signal from the local oscillator 902 to output the intermediate frequency signal having an intermediate frequency. The intermediate frequency signal outputted from the frequency converter 901 is amplified by an intermediate frequency amplifier 903. The intermediate frequency amplifier 903 is configured to include, for example, a band-pass filter 914 that band-pass-filters only an intermediate frequency component and an intermediate frequency amplifier 915 that amplifies the signal outputted from the band-pass filter 914. The intermediate frequency signal amplified by the intermediate frequency amplifier 903 is converted into digital data by an analog to digital converter (hereinafter, the analog to digital conversion will be referred to as an A/D conversion). The digital data obtained by the A/D conversion is inputted to a receiving processor 905, and the receiving processor 905 performs spectrum-despreading and data demodulation on the GPS signal from an acquisition-target satellite synchronizing with a pre-allocated pseudo random noise code (referred to as a PRN code hereinafter), to extract navigation message data carried on the GPS signal transmitted from the acquisition-target satellite. The receiving processor 905 is configured to include, for example, a despreader 916 that despreads a spectrum spreading code by the same code as that used for spreading to restore the signal, a data demodulator 917 that demodulates the signal despreaded by the despreader 916 and that outputs demodulated data, and a PRN generator 918 that generates a PRN code allocated to each GPS satellite. The navigation message data extracted by the receiving processor 905 is subjected to a predetermined arithmetic processing by a positioning processor unit 906 to accurately measure position information, and a measurement result is displayed on a display unit 907.

The spread spectrum receiver apparatus according to the prior art is disclosed in, for example, Patent Documents 1, and 2.

Patent Document 1: Japanese Patent Application Laid-Open No. 2003-43126; and
Patent Document 2: Japanese Patent Application Laid-Open No. 2001-28575.

DISCLOSURE OF THE INVENTION

On the other hand, an L2 spectrum and an L5 spectrum (1176.45 MHz) as well as the currently commercially available L1 spectrum are planned to be commercially available for a satellite positioning system including the GPS. If the L2 spectrum and the L5 spectrum are commercially available, the number of acquisition-target satellite radio waves increases from four or more to eight or more. In addition, accuracy for correcting ionospheric delay and high-accuracy positioning can be made because of difference in carrier frequency band among the acquisition-target satellite radio waves. In this case, to acquire satellite radio waves in not only the L1 spectrum but also the L2 and L5 spectrums, a GPS receiver apparatus simultaneously receiving signals in different frequency bands is necessary. Although this function can be realized using a plurality of receiver apparatuses, the increase in the number of receiver apparatuses is cost-consuming and unfavorable due to an increase in implementation area and increases in current consumption and price.

It is an object of the present invention to provide a spread spectrum receiver apparatus capable of solving the above-stated problems, simultaneously receiving radio waves from GPS satellites having a plurality of frequency bands different from one another, and being configured more simply than the prior art.

In addition, it is another object of the present invention to provide a position detector apparatus and a transport apparatus using the same position detector apparatus, each capable of detecting a position with precision higher than that of the prior art utilizing the above-mentioned spread spectrum receiver apparatus.

MEANS FOR SOLVING THE PROBLEMS

According to the first aspect of the present invention, there is provided a spread spectrum receiver apparatus including two first frequency means, adder means, analog to digital converter means, and receiving processor means. The two first frequency converter means convert two radio signals spread-spectrum modulated according to a spreading code and having two carrier frequencies different from each other, into intermediate frequency signals each having a substantially identical first intermediate frequency, using a single local oscillation signal having a local oscillation frequency calculated based on the two carrier frequencies, and output the first intermediate frequency signals, respectively. The adder means adds up the two intermediate frequency signals outputted from the two first frequency converter means, respectively, and outputs a first intermediate frequency signal combined as a result of the addition. The analog to digital converter means converts the intermediate frequency signal outputted from the adder means into a digital signal, and outputs the digital signal. The receiving processor means despreads at least one digital signal included in the two radio signals using the spreading code based on the digital signal outputted from the analog to digital converter means, to demodulate the at least one digital signal to digital data, and output the digital data.

In the above-mentioned spread spectrum receiver apparatus, the local oscillation frequency is one of substantially a half of a sum of the two carrier frequencies, and substantially a half of a difference between the two carrier frequencies.

In addition, the above-mentioned spread spectrum receiver apparatus further includes second frequency converter means, which converts one radio signal being spread-spectrum modulated according to a spreading code and having a carrier frequency different from the carrier frequencies of the two radio signals, into an intermediate frequency signal having the substantially identical first intermediate frequency using a local oscillation signal having a predetermined oscillation frequency, and outputs the intermediate frequency signal. The adder means adds up the three intermediate frequency signals outputted from the two first frequency converter means and the second frequency converter means, respectively.

Further, the above-mentioned spread spectrum receiver apparatus further includes frequency shifter means which shifts the frequency of the local oscillation signal used by the two first frequency converter means by a predetermined frequency. The frequency-shifted local oscillation signal is used as the local oscillation signal used by the second frequency converter means.

In addition, the above-mentioned spread spectrum receiver apparatus further includes third frequency converter means, provided to be inserted between the adder means and the analog to digital converter means. The third frequency converter means converts the intermediate frequency signal outputted from the adder means into an intermediate frequency signal having a second intermediate frequency different from the first intermediate frequency, and outputs the intermediate frequency signal having the second intermediate frequency to the analog to digital converter means.

Further, in the above-mentioned spread spectrum receiver apparatus, each of the frequency converter means includes a filter, and a mixer. The filter filters the inputted radio signal(s) to extract a frequency component of a predetermined desired wave. The mixer mixes up the radio signal outputted from the filter and the local oscillation signal, and outputs a mixed signal of the radio signal outputted from the filter and the local oscillation signal.

Furthermore, in the above-mentioned spread spectrum receiver apparatus, each of the frequency converter means includes variable gain amplifier means for changing a level of one of the intermediate frequency signal and the radio signal processed by each of the frequency converter means. The receiving processor means includes level detector means for detecting a level of the digital signal corresponding to one of the radio signals. The spread spectrum receiver apparatus further includes control signal generator means, which controls each of the variable gain amplifier means so that levels of ones of the intermediate frequency signals and the radio signals processed by the respective frequency converter means are substantially equal to each other, based on the level of the digital signal corresponding to one of the radio signals and detected by the level detector means.

According to the second aspect of the present invention, there is provided a spread spectrum receiver apparatus including two high-frequency amplifier means, adder means, first frequency converter means, analog to digital converter means, and receiving processor means. The two high-frequency amplifier means amplify two radio signals spread-spectrum modulated according to a spreading code and having two carrier frequencies different from each other, and output the two amplified radio signals, respectively. The adder means adds up the two radio signals outputted from the two high-frequency amplifier means, and outputs a radio signal combined as a result of the addition. The first frequency converter means converts the radio signal outputted from the adder means into an intermediate frequency signal having a substantially identical first intermediate frequency using a single local oscillation signal having a local oscillation frequency calculated based on the two carrier frequencies, and outputs the intermediate frequency signal. The analog to digital converter means converts the intermediate frequency signal outputted from the first frequency converter means into a digital signal, and outputs the digital signal. The receiving processor means despreads at least one digital signal included in the two radio signals using the spreading code based on the digital signal outputted from the analog to digital converter means, to demodulate the at least one digital signal to digital data, and output the digital data.

In the above-mentioned spread spectrum receiver apparatus, the local oscillation frequency is one of substantially a half of a sum of the two carrier frequencies and substantially a half of a difference between the two carrier frequencies.

In addition, the above-mentioned spread spectrum receiver apparatus further includes third frequency converter means, provided to be inserted between the frequency converter means and the analog to digital converter means. The third frequency converter means converts the intermediate frequency signal outputted from the first frequency converter means into an intermediate frequency signal having a second intermediate frequency different from the first intermediate frequency, and outputs the intermediate frequency signal having the second intermediate frequency.

Further, in the above-mentioned spread spectrum receiver apparatus, each of the frequency converter means includes variable gain amplifier means for changing a level of one of the intermediate frequency signal and the radio signal processed by each of the frequency converter means. The receiving processor means includes level detector means for detecting a level of the digital signal corresponding to one of the radio signals. The spread spectrum receiver apparatus further includes control signal generator means for controlling each of the variable gain amplifier means so that levels of the intermediate frequency signals or the radio signals processed by the respective frequency converter means are substantially equal to each other, based on the level of the digital signal corresponding to one of the radio signals and detected by the level detector means.

In the above-mentioned spread spectrum receiver apparatus, the plurality of radio signals include a plurality of digital signals being spread-spectrum modulated using spreading codes different from one another, respectively. The receiving processor means includes a plurality of receiving processors for despreading the plurality of digital signals, to demodulate the plurality of digital signals to digital data.

In addition, in the above-mentioned spread spectrum receiver apparatus, the plurality of radio signals include a plurality of digital signals being spread-spectrum modulated using a spreading code, respectively. The third frequency converter means includes a filter, a local oscillator, and a mixer. The filter filters the inputted intermediate frequency signal to extract a frequency component of a predetermined desired wave. The local oscillator generates a local oscillation signal having a predetermined local oscillation frequency. The mixer mixes up the intermediate frequency signal outputted from the filter and the local oscillation signal, and outputting the mixed signal of the intermediate frequency signal outputted from the filter and the local oscillation signal. The pass bandwidth of the filter is set to a maximum spreading bandwidth among spreading bandwidths of the plurality of intermediate frequency signals.

Further, the above-mentioned spread spectrum receiver apparatus further includes analog signal processor means, provided to be inserted between the third frequency converter means and the analog to digital converter means. The analog signal processor means filters the intermediate frequency signal outputted from the third frequency converter means to extract a frequency component of a predetermined desired wave, and amplifies a signal corresponding to the frequency component of the predetermined desired wave.

Furthermore, in the above-mentioned spread spectrum receiver apparatus, the plurality of radio signals is spread-spectrum modulated using spreading codes different from one another so as to have spreading bandwidths different from one another. The pass bandwidth of the analog signal processor means is set to a maximum spreading bandwidth among spreading bandwidths of the plurality of radio signals.

In addition, in the above-mentioned spread spectrum receiver apparatus, the plurality of radio signals include a plurality of digital signals being spread-spectrum modulated using spreading codes different from one another, respectively. The receiving processor means includes a plurality of receiving processors each despreading the plurality of digital signals to demodulate the plurality of digital signals to digital data.

Further, in the above-mentioned spread spectrum receiver apparatus, the plurality of radio signals are spread-spectrum modulated so as to have spreading bandwidths different from one another. The analog signal processor means and the analog to digital converter means are provided for each of the radio signals. Each band pass width of the analog signal processor means is set to a spreading bandwidth of each of the radio signals.

Furthermore, in the above-mentioned spread spectrum receiver apparatus, the receiving processor means includes a code generator, a despreading circuit, and a data demodulator. The code generator generates a spreading code identical with the spreading code used when one of the radio signals to be despreaded is spread-spectrum modulated. The despreading circuit despreads the inputted digital signal using the spreading code generated by the code generator. The data demodulator demodulates the digital signal despreaded by the despreading circuit to the digital data.

According to the third aspect of the present invention, there is provided a position detector apparatus including the above-mentioned spread spectrum receiver apparatus. The position detector apparatus includes an antenna, positioning means, and display means. The antenna is connected to the spread spectrum receiver apparatus, and receives each of the radio signals. The positioning means measures a position of the position detector apparatus based on digital data outputted from the spread spectrum receiver apparatus. The display means displays the position measured by the positioning means.

The position detector apparatus is a portable one which is further includes power supply means for supplying an electric power to the position detector apparatus.

In addition, the position detector apparatus further includes speed detector, angular-speed detector means, and control means. The speed detector means detects a speed of the position detector apparatus. The angular-speed detector means detects a traveling direction of the position detector apparatus during movement. The control means performs both position detection based on autonomous navigation and position detection based on navigation of the position detector apparatus, and detects the position of the position detector apparatus based on the speed detected by the position detector means and the traveling direction detected by the angular-speed detector means.

According to the fourth aspect of the present invention, there is provided a moving transport apparatus including the above-mentioned position detector apparatus.

ADVANTAGEOUS EFFECTS OF THE INVENTION

Therefore, the spread spectrum receiver apparatus according to the present invention can simultaneously receive radio waves from GPS satellites having a plurality of frequency bands different from one another, is simpler in configuration than the spread spectrum receiver apparatus according to the prior art, and can realize reduction in manufacturing cost. Furthermore, the position detector apparatus capable of detecting with higher accuracy than the position detector apparatus according to the prior art using the spread spectrum receiver apparatus, and the transport apparatus using the position detector apparatus can be provided.

BRIEF DESCRIPTION OF THE DRAWINGS

Fig. 1 is a block diagram showing a configuration of a spread spectrum receiver apparatus according to a first embodiment of the present invention.

Fig. 2 is a spectrum chart for explaining frequency relation in the spread spectrum receiver apparatus shown in Fig. 1.

Fig. 3 is a spectrum chart showing a modification of Fig. 2.

Fig. 4 is a block diagram of a parallel receiving processor 104A according to a first modification of the first embodiment of the present invention.

Fig. 5 is a block diagram showing a configuration of a spread spectrum receiver apparatus according to a second modification of the first embodiment of the present invention.

Fig. 6 is a block diagram of a parallel receiver circuit 104B according to a third modification of the first embodiment of the present invention.

Fig. 7 is a spectrum chart showing a pass band of a band-pass filter 115-1.

Fig. 8 is a spectrum chart showing a pass band of a band-pass filter 115-M.

Fig. 9 is a block diagram showing a configuration of a spread spectrum receiver apparatus according to a second embodiment of the present invention.

Fig. 10 is a spectrum chart for explaining frequency relation in the spread spectrum receiver apparatus shown in Fig. 9.

Fig. 11 is a block diagram showing a configuration of a spread spectrum receiver apparatus according to a modification of the second embodiment of the present invention.

Fig. 12 is a block diagram showing a configuration of a spread spectrum receiver apparatus according to a third embodiment of the present invention.

Fig. 13 is a spectrum chart for explaining frequency relation in the spread spectrum receiver apparatus shown in Fig. 12.

Fig. 14 is a spectrum chart for explaining another frequency relation in a modification of the spread spectrum receiver apparatus shown in Fig. 12.

Fig. 15 is a block diagram showing a configuration of a spread spectrum receiver apparatus according to a fourth embodiment of the present invention.

Fig. 16 is a spectrum chart for explaining frequency relation in the spread spectrum receiver apparatus shown in Fig. 15.

Fig. 17 is a block diagram showing a configuration of a spread spectrum receiver apparatus according to a fifth embodiment of the present invention.

Fig. 18 is a block diagram showing a configuration of a spread spectrum receiver apparatus according to a sixth embodiment of the present invention.

Fig. 19 is a block diagram showing a configuration of a spread spectrum receiver apparatus according to a seventh embodiment of the present invention.

Fig. 20 is a block diagram showing a configuration of a spread spectrum receiver apparatus according to an eighth embodiment of the present invention.

Fig. 21 is a block diagram showing a configuration of a spread spectrum receiver apparatus according to a ninth embodiment of the present invention.

Fig. 22 is a block diagram showing a configuration of a position detector apparatus 500 according to a tenth embodiment of the present invention.

Fig. 23 is a block diagram showing a configuration of a vehicle 550, e.g., an automobile, including a position detector apparatus 500 that includes a spread spectrum receiver apparatus 502 according to an eleventh embodiment of the present invention.

Fig. 24 is a block diagram showing a configuration of a spread spectrum receiver apparatus according to a first modification of the third embodiment of the present invention.

Fig. 25 is a block diagram showing a configuration of a spread spectrum receiver apparatus according to a second modification of the third embodiment of the present invention.

Fig. 26 is a block diagram showing a detailed configuration of a frequency shifter 215 shown in Figs. 25 and 28.

Fig. 27 is a block diagram showing a configuration of a spread spectrum receiver apparatus according to a first modification of the fourth embodiment of the present invention.

Fig. 28 is a block diagram showing a configuration of a spread spectrum receiver apparatus according to a second modification of the fifth embodiment of the present invention.

Fig. 29 is a block diagram showing a configuration of a spread spectrum receiver apparatus according to a prior art.

DESCRIPTION OF REFERENCE SYMBOLS

100-1 to 100-N, 200-1, 200-2, 200-3, 300-1, 300-2, and 400 ... Antenna;
101-1 to 101-N, 201-1, 201-2, 201-3, and 303 ... Frequency converter;
102, and 302 ... Adder;
103 ... Analog signal processor;
104, 104-1 to 104-N, and 104-M ... Receiving processor;
104A, and 104B ... Parallel receiver processing circuit;
105-1 to 105-N ... Level detector;
106-1 to 106-N ... Control signal generator;
111-1 to 111-N, 211-1, 211-2, 211-3, 31.1-1, and 311-2 ... Band-pass filter;
112-1 to 111-N, 212-1, 212-2, 212-3, 312-2, 312-2, and 402 ... High frequency amplifier;
113-1 to 113-N, 213-1, 213-2, 213-3, and 313 ... Mixer;
114-1 to 114-N, 202, 214-3, and 314 ... Local oscillator;
115, 115-1 to 115-M, and 141 ... Band-pass filter;
116, 116-1 to 116-M ... Intermediate frequency amplifier;
117, 117-1 to 117-M... Analog to digital converter (A/D converter);
118, 118-1 to 118-N, and 118-M ... Despreading circuit;
119, 219-1 to 119-N, and 119-M ... Data demodulator;
120, 120-1 to 120-N, and 120-M ... Pseudo random noise code generator (PRN generator);
121-1 to 121-N ... Variable gain amplifier;
131 ... Intermediate frequency converter;
142, and 601 ... Mixer;
143, and 602 ... Local oscillator;
215 ... Frequency shifter;
301-1, and 301-2 ... High frequency amplifier;
401 ... Band-pass filter circuit;
401a, 401b, and 603 ... Band-pass filter;
500 ... Position detector apparatus;
501 ... Antenna;
502 ... Spread spectrum receiver apparatus;

503 ... Positioning processor unit;

504 ... Display unit;

505 ... Power supply unit;

550 ... Vehicle;

551 ... Speed detector;

552 ... Angular-speed detector;

553 ... Map data memory;

554 ... Controller; and

555 ... Car navigator apparatus.

BEST MODE FOR CARRYING OUT THE INVENTION

Embodiments of the present invention will be described hereinafter with reference to the drawings. In the embodiments, like constituent elements are denoted by the same reference symbols.

FIRST EMBODIMENT

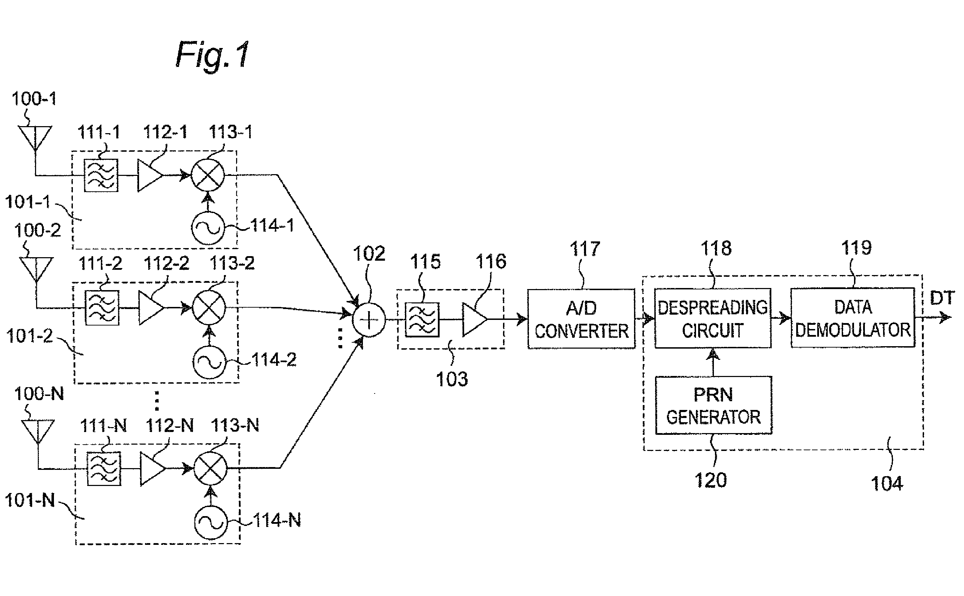

Fig. 1 is a block diagram showing a configuration of a spread spectrum receiver apparatus according to a first embodiment of the present invention. The spread spectrum receiver apparatus according to the first embodiment is characterized in that, radio signals, that have been spread-spectrum modulated by transmitters and received by N antennas 100-1 to 100-N, respectively, are converted into intermediate frequency signals having substantially the same intermediate frequency by N frequency converters 101-1 to 101-N, the intermediate frequency signals are added up by an adder 102, and the intermediate frequency signals are subjected to spectrum despreading based on an intermediate frequency signal obtained as a result of the addition to be demodulated.

Referring to Fig. 1, the radio signals that have carrier frequencies fRFn (n = 1, 2, ..., N; the same shall apply hereinafter) and that have been spread-spectrum modulated are received by the respective antennas 100-n, and then inputted to the respective frequency converters 101-n. In this case, the radio signals having different carrier frequencies fRFn are transmitted after being spread-spectrum modulated by the transmitters so as to have, for example, different bandwidths using different spreading codes, respectively. Each frequency converter 101-n frequency-converts each of the inputted radio signals into an intermediate frequency signal having substantially the same intermediate frequency fIF, and outputs the intermediate frequency signal to the adder 102. Each frequency converter 101-n (n = 1, 2, ..., N) is configured to include a band-pass filter 111-n, a low-noise high frequency amplifier 112-n, a mixer 113-n, and a local oscillator 114-n. In each frequency converter 101-n, the band-pass filter 111-n performs band-pass filtering on the radio signal received by the antenna 100-n to extract a frequency component of a desired wave around and including each carrier frequency fRFn, the high frequency amplifier 112-n amplifies the resultant radio signal (it is to be noted that the present invention is not limited to this and that the received radio signal can be amplified by the high frequency amplifier 112-n before being subjected to the band-pass filtering by the band-pass filter 111-n), and the amplified radio signal is inputted to the mixer 113-n. Each of the mixers 113-n mixes and multiplies the extracted radio signal by a local oscillation signal having a local oscillation frequency fLon from the local oscillator 114-n, and outputs a resultant signal to the adder 102. In this case, the local oscillator 114-n generates the local oscillation signal so that the local oscillation frequency fLon (n = 1, 2, ..., N) substantially satisfies a relation expressed by one of the following Equations (1), (2), and (3):

$$fRF1 - fLo1 = fRF2 - fLo2 = \ldots = fRFN - fLoN = fIF \quad (1);$$

$$fLo1 - fRF1 = fLo2 - fRF2 = \ldots = fLoN - fRFN = fIF \quad (2);$$

and

$$fLo1 - fRF1 = fLo2 - fRF2 = \ldots = fLoN - fRFN = 0 \quad (3).$$

The Equation (1) corresponds to a case of fRFn > fLon (n = 1, 2, ..., N), the Equation (2) corresponds to the case of fRFn < fLon (n = 1, 2, ..., N), and the Equation (3) corresponds to a case of fRFn = fLon (n = 1, 2, ..., N). The Equation (3), in particular, corresponds to a case where the intermediate frequency fIF is zero and where the radio signal is directly frequency-converted into a baseband signal. In this case, as a filter provided in rear of the adder 102 and filtering the signal, a low-pass filter may be used in place of a band-pass filter. Furthermore, while the Equations (1) to (3) show exact formulas, the present invention is not limited to them and it suffices to substantially satisfy one of the equations.

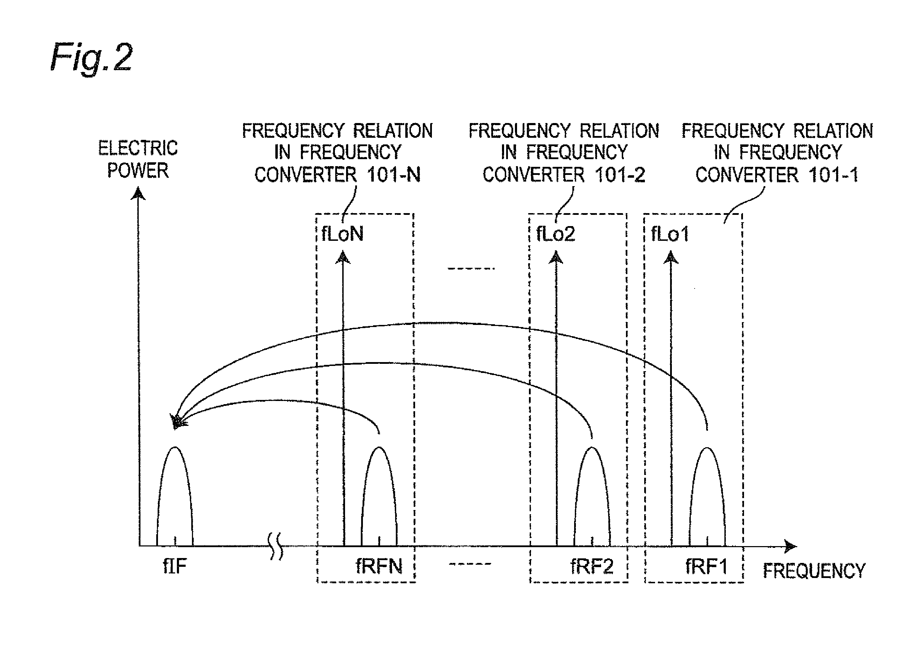

Fig. 2 is a spectrum chart showing the frequency relation expressed by the Equation (1). The intermediate frequencies IFn that have been frequency-converted by the respective frequency converters 101-n are added and mixed up with the same frequency fIF by the adder 102. The intermediate frequency signal obtained by the addition made by the adder 102 is subjected to an analog signal processing by an analog signal processor 103. The analog signal processor 103 is configured to include, for example, a band-pass filter 115 and an intermediate frequency amplifier 116. The intermediate frequency signal input from the adder 102 is band-pass filtered by the band-pass filter 115 to extract only a frequency component of a desired wave, and the resultant intermediate frequency signal is amplified by the intermediate frequency amplifier 116. The intermediate frequency signal amplified by the intermediate frequency amplifier 116 is converted into a digital signal by an A/D converter 117, and the digital signal is outputted to a receiving processor 104.

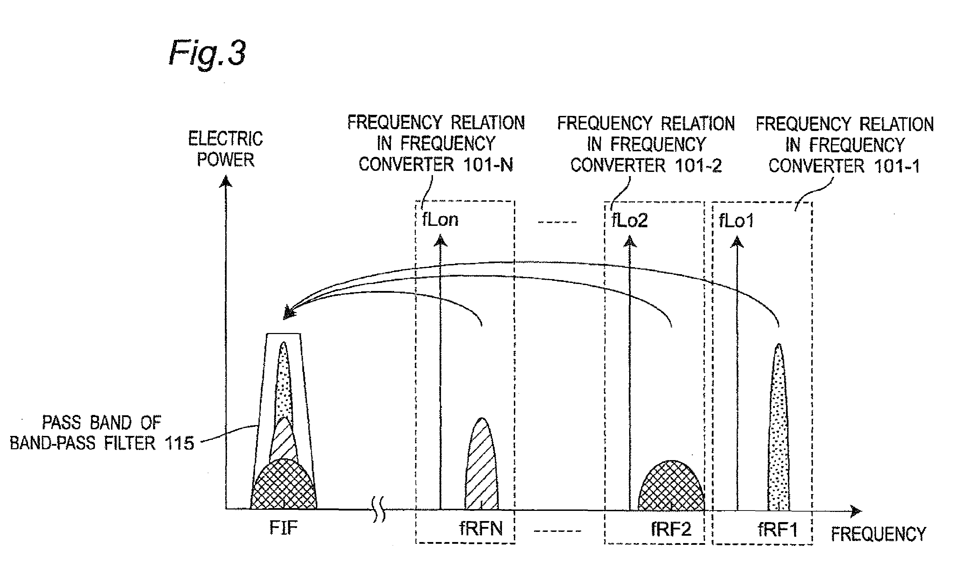

If the N radio signals received by the antennas 100-n are spread-spectrum modulated by the transmitters so as to have a plurality of p different bandwidths, respectively, a pass band width of a pass band of the band-pass filter 115 is preferably set to substantially coincide with a largest bandwidth among the p bandwidths as shown in Fig. 3. This is similarly applicable to embodiments of spread spectrum receiver apparatuses each including the band-pass filter 115 to be described later,

The receiving processor 104 is configured to include a despreading circuit 118, a data demodulator 119, and a PRN generator 120. The digital signal from the A/D converter is inputted to the despreading circuit 118. The despreading circuit 118 performs despreading on the digital signal using N PRN codes, which are spreading codes different from one another to correspond to the respective carrier frequencies fRFn and identical with those of the transmitters, from the PRN generator 120 that sequentially generates the N PRN codes by a time division method, restores the original signal, and outputs the original signal to the data demodulator 119. The data demodulator 119 demodulates the despreaded digital signal to demodulated data DT and outputs the demodulated data DT.

In the spread spectrum receiver apparatus configured as stated above, a plurality of intermediate frequency signals is added up into one intermediate frequency signal, and the subsequent signal processing is configured by one receiver circuit system. Therefore, the configuration of the overall spread spectrum receiver apparatus can be simplified as compared with the spread spectrum receiver apparatus according to the prior art.

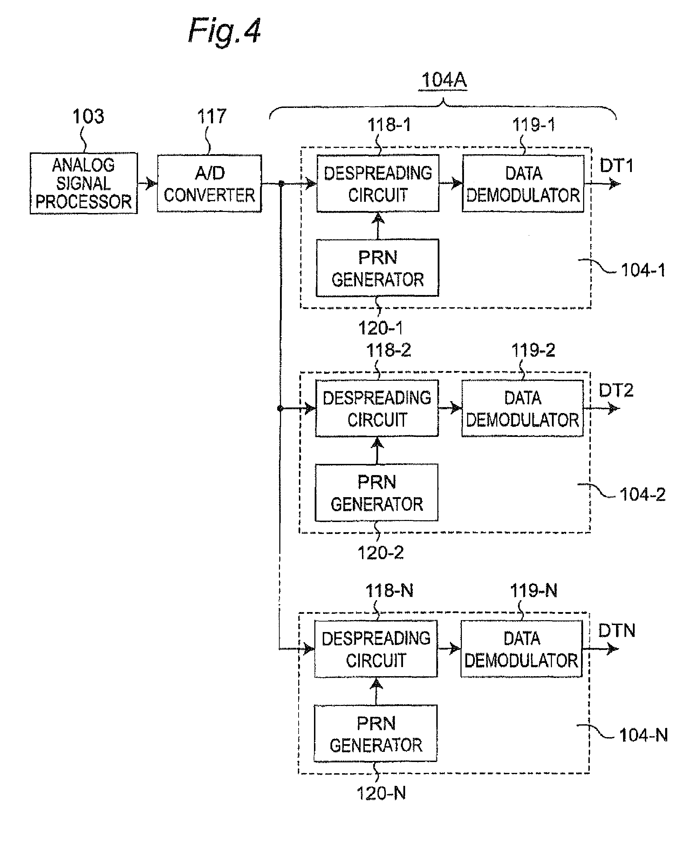

The receiving processor 104 of the spread spectrum receiver apparatus shown in Fig. 1 sequentially processes the intermediate frequency signal by a time division method using a plurality of spreading codes corresponding to the intermediate frequency signal. However, the present invention is not limited to this. As shown in Fig. 4, the receiving processor 104 that includes the despreading circuit 118, the PRN generator 120, and the data demodulator 119 may be provided for each of the carrier frequency bands so as to perform high-speed processings on signals in parallel. Fig. 4 is a block diagram of a parallel receiving processor 104A according to a first modification of the first embodiment of the present invention.

Referring to Fig. 4, the parallel receiver processing circuit 104A including a plurality of N receiving processors 104-1 to 104-N is provided. The digital signal from the A/D converter 117 is divided into N digital signals, and the N digital signals are inputted to the respective receiving processors 104-1 to 104-N. Each PRN generator 120-n generates a PRN signal corresponding to a radio signal having each carrier frequency fRFn and outputs the PRN signal to a despreading circuit 118-n. Each despreading circuit 118-n performs despreading on the digital signal inputted from the A/D converter 117 using the PRN signal from the PRN generator 120-n, and then outputs the despread digital signal to a data demodulator 119-n. Each data demodulator 119-n demodulates the despreaded digital signal to demodulated data DTn and outputs the demodulated data DTn.

The GPS acquires four or more satellites with one frequency and performs positioning with respect to the satellites. In this case, as shown in Fig. 4, the high-speed processing can be performed if a plurality of receiving processors 104-n perform parallel processings for the respective acquired satellites.

In the parallel receiving processor 104A shown in Fig. 4, when the N received radio signals include digital signals having a plurality of p types (p≤N) spreading bandwidths different from one another (that is, also different in spreading code), p receiving processors 104 may be provided to correspond to the spreading bandwidths, respectively. Furthermore, in the parallel receiving processor 104A shown in Fig. 4, when the received N radio signals include digital signals substantially equal to each other in spreading bandwidth (but different in spreading code), N receiving processors 104 may be provided.

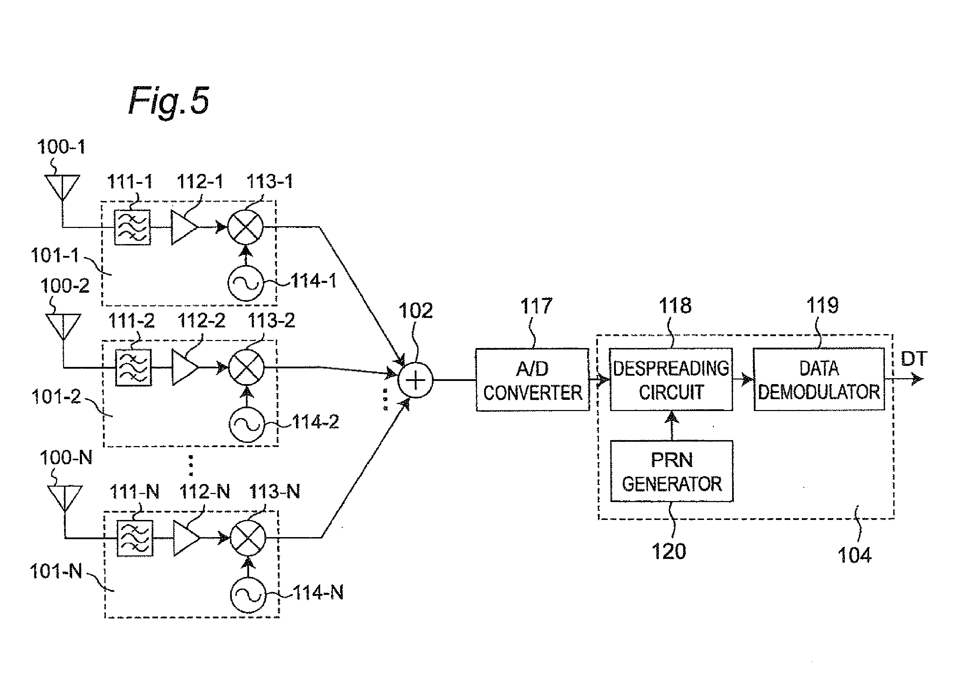

Fig. 5 is a block diagram showing a configuration of a spread spectrum receiver apparatus according to a second modification of the first embodiment of the present invention. The second modification of the first embodiment shown in Fig. 5 is characterized, as compared with the first embodiment shown in Fig. 1, in that the spread spectrum receiver apparatus does not include the analog signal processor 103. In this case, the second modification can exhibit the same advantages as those of the first embodiment.

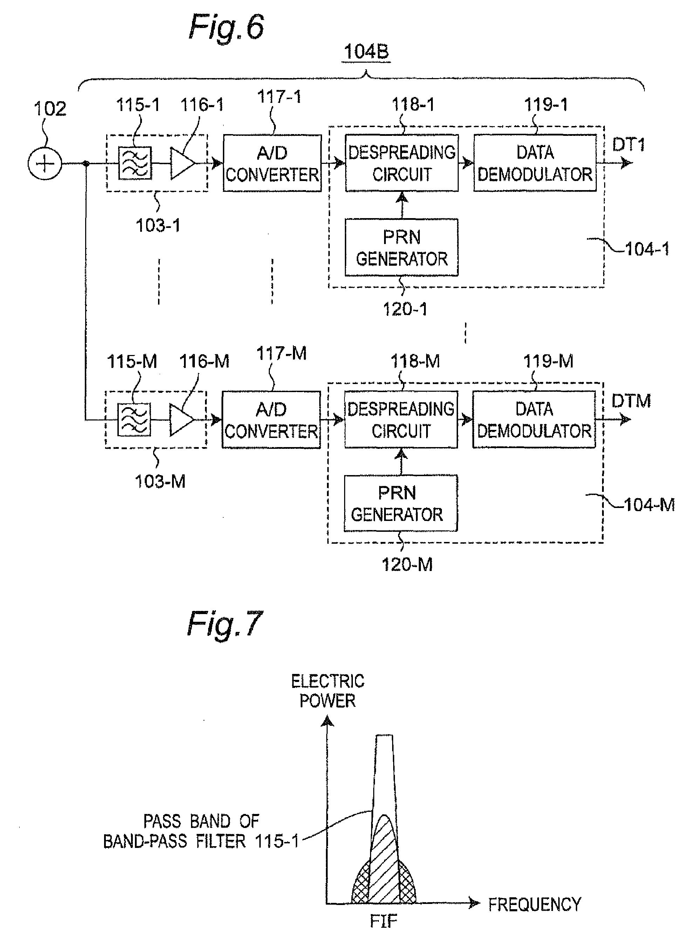

Fig. 6 is a block diagram showing a configuration of a parallel receiver circuit 104B according to a third modification of the first embodiment of the present invention. The third modification of the first embodiment shown in Fig. 6 is characterized, as compared with the first modification shown in Fig. 4, in that circuits in rear of the adder 102 are constituted by the parallel receiver processing circuit 104B including a plurality of receiving processors.

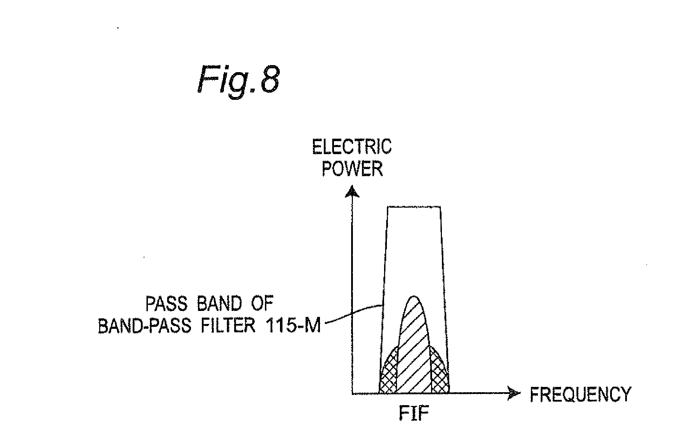

Referring to Fig. 6, the intermediate frequency signal outputted from the adder 102 is divided into M intermediate frequency signals. After the divided intermediate frequency signals are inputted to analog signal processors 103-m (m = 1, 2, …, M; the same shall apply hereafter), receiving processors 104-m execute despreading and data demodulation processings on the intermediate frequency signals via A/D converters 117-m, respectively. In this case, N radio signals received by the receiver apparatus include M types (M ≤ N) signals that, for example, have been subjected to spread spectrum modulation using different spreading codes and that have M different spreading bandwidths, respectively. Each analog signal processor 103-m is configured to include a band-pass filter 115-m and an intermediate frequency amplifier 116-m. Each band-pass filter 115-m has a spreading bandwidth corresponding to each type of signals as shown in, for example, Figs. 7 and 8.

Therefore, according to the third modification shown in Fig. 6, the M types of intermediate frequency signals that have been added up and mixed together with substantially the same frequency and that have different spreading bandwidths are band-pass filtered by the band-pass filters 115-m corresponding to the spreading bandwidths and subjected to A/D conversion and receiver processings for the respective spreading bandwidths. By doing so, noise can be reduced for the signal having a narrower bandwidth because signals wider in bandwidth than the signal which is not necessary for signal processing are band-pass filtered by the band-pass filter. If the frequency relation is set as to satisfy the case expressed by the Equation (3), the band-pass filter 115-m may be a low-pass filter.

SECOND EMBODIMENT

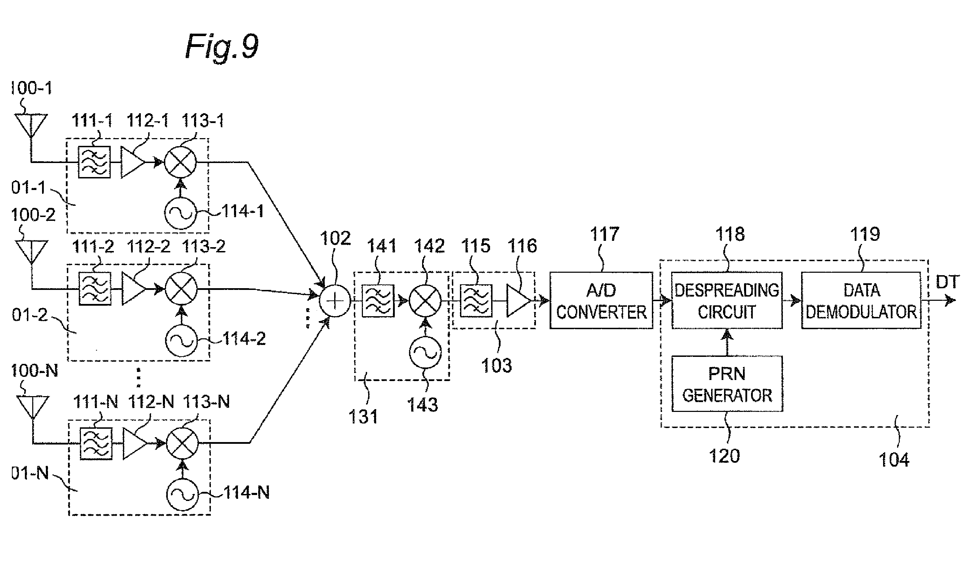

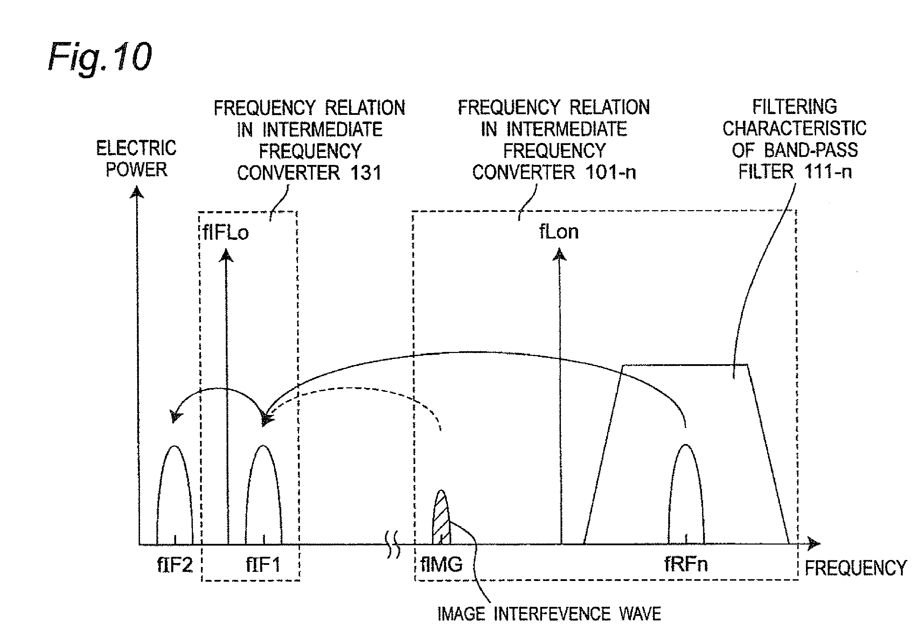

Fig. 9 is a block diagram showing a configuration of a spread spectrum receiver apparatus according to a second embodiment of the present invention. Fig. 10 is a spectrum chart for explaining frequency relation in the spread spectrum receiver apparatus shown in Fig. 9. The second embodiment is characterized, as compared with the first embodiment shown in Fig. 1, in that the spread spectrum receiver apparatus includes another frequency converter 131 between an adder 102 and an analog signal processing circuit 103 besides frequency converters 101-n so as to perform two-stage frequency conversion (so-called double conversions).

The spread spectrum receiver apparatus according to the first embodiment shown in Fig. 1 is sometimes incapable of setting the intermediate frequency fIF to a higher frequency because of insufficient processing capabilities of the A/D converter 117 and the receiving processor 104. In this case, the band-pass filters 111-n can suppress image interference waves insufficiently, resulting in degradation in the sensitivity of the receiver apparatus. The methods using an image-removal mixer have been conventionally proposed to prevent the degradation in sensitivity. However, if an integrated apparatus is provided, only a suppression amount of about 40 dB can be generally ensured due to irregularities among elements or the like. Therefore, the suppression amount is insufficient for an instance, e.g., the GPS of receiving faint signals. The spread spectrum receiver apparatus capable of removing image interference waves and reducing noise amount of the image interference waves and being configured at low cost is provided according to the present embodiment.

Referring to Fig. 9, the spread spectrum receiver apparatus performs the same operation as that performed by the spread spectrum receiver apparatus according to the first embodiment except for the following respect. The intermediate frequencies fIFn from the frequency converters 101-n are set to be sufficiently higher than central frequencies for band-pass filtering of the band-pass filters 111-n, whereby the band-pass filters 111-1, 111-2, ..., 111-N suppress image-frequency interference waves.

The intermediate frequency signals from the frequency converters 101-n (referred to as first intermediate frequency signals hereinafter) are added up and combined by the adder 102, and a combined intermediate frequency signal is outputted to the intermediate frequency converter 131. The intermediate frequency converter 131 is configured to include a band-pass filter 141 that band-passes with respect to the first intermediate frequency signal, a mixer 142, and a local oscillator 143. The first intermediate frequency signal obtained as a result of combining by and outputted from the adder 102 is subjected to band-pass filtering by the band-pass filter 141 to extract only a frequency component of a desired wave, and the resultant first intermediate frequency signal is inputted to the mixer 142. The mixer 142 mixes up the first intermediate frequency signal from the band-pass filter 141 and a local oscillation signal from the local oscillator 143 to multiply them by each other. Further, the mixer 142 generates a second intermediate frequency signal having a lower intermediate frequency than that of the first intermediate frequency signal, and outputs the second intermediate frequency signal to the analog signal processor 103.

As apparent from Fig. 10, in the spread spectrum receiver apparatus according to the present embodiment, after the band-pass filters 111-n can remove the image interference waves generated by the frequency converters 111-n, the intermediate frequency can be converted into another frequency. Therefore, the spread spectrum receiver apparatus according to the present embodiment can remove the image interference waves and reduce the noise amount of the image interference waves. The operation after the analog signal processor 103 is the same as that performed by the spread spectrum receiver apparatus according to the first embodiment.

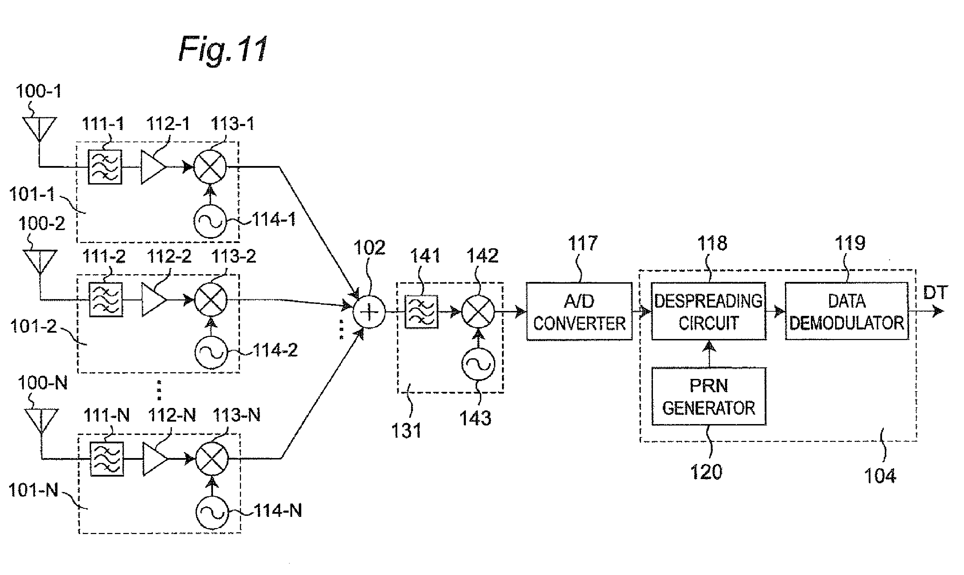

The spread spectrum receiver apparatus according to the present embodiment may include a plurality of receiving processors 104-n for respective frequency bands and preferably cause the receiving processors 104-n to perform high-speed processings on the signals corresponding to respective satellites to be acquired by the GPS in a manner similar to that of the parallel receiver processing circuit 104A shown in Fig. 4. Furthermore, as shown in a modification shown in Fig. 11, the spread spectrum receiver apparatus according to the present embodiment may not include the analog signal processor 103. These modifications are applicable to respective embodiments to be described later.

As stated so far, the spread spectrum receiver apparatus according to the present embodiment can remove the image interference waves, reduce the noise amount of the image interference waves, and can be configured at low cost.

In the second embodiment stated above, the bandwidth of the band-pass characteristics of the band-pass filter 141 of the frequency converter 131 may be set to substantially coincide with a largest bandwidth of signals spread-spectrum modulated in a manner similar to that of the bandwidth of the band-pass characteristics of the band-pass filter 115 shown in Fig. 3. This is similarly applicable to embodiments of spread spectrum receiver apparatuses each using the frequency converter 131 to be shown later.

THIRD EMBODIMENT

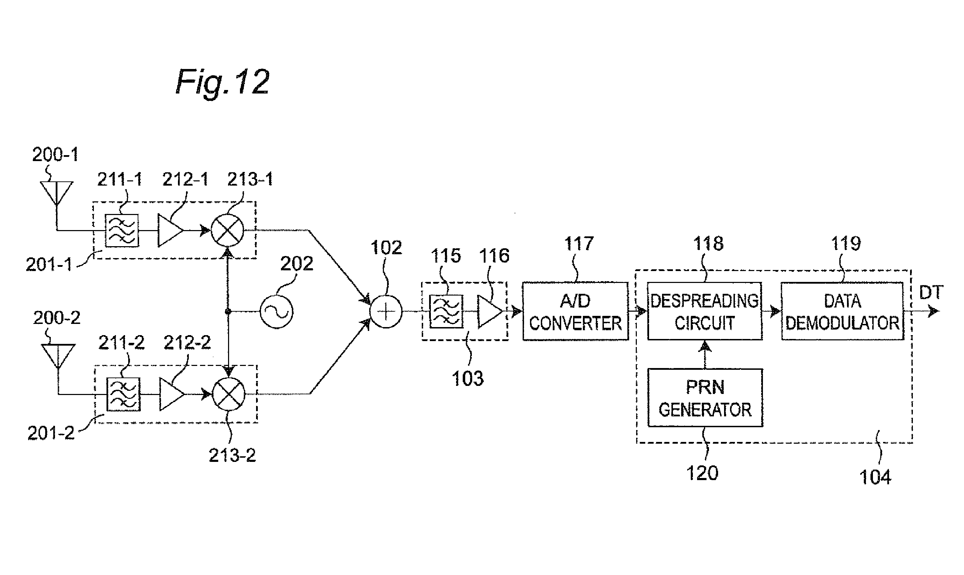

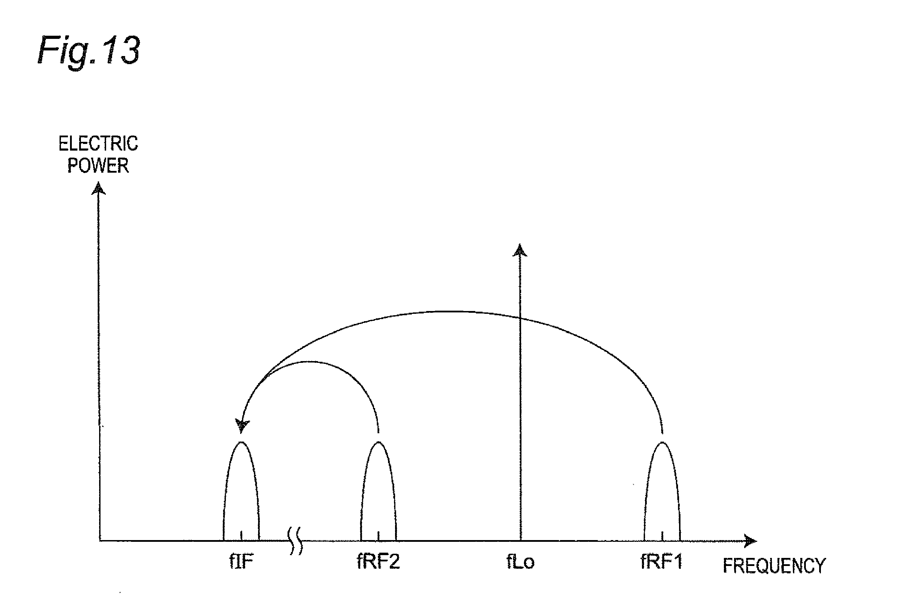

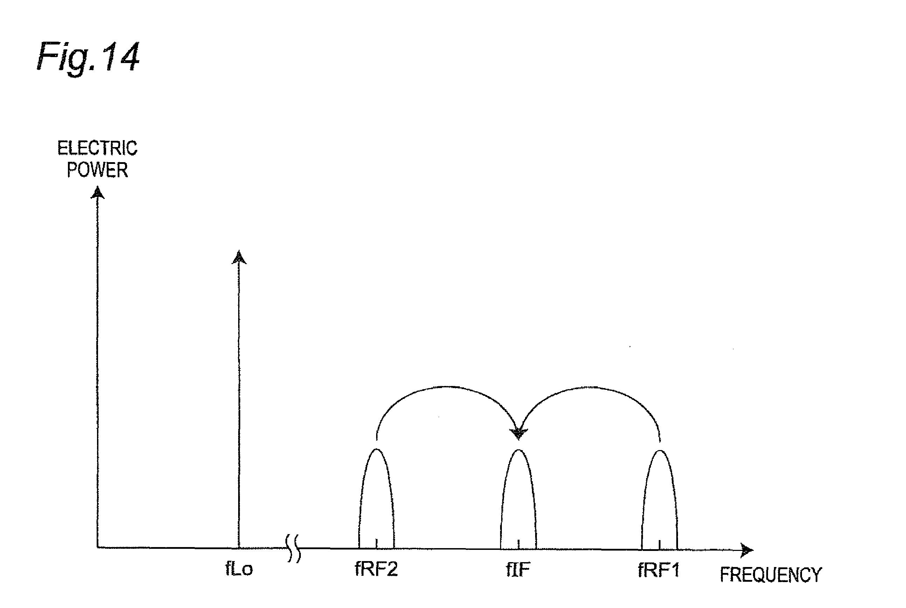

Fig. 12 is a block diagram showing a configuration of a spread spectrum receiver apparatus according to a third embodiment of the present invention. Fig. 13 is a spectrum chart for explaining frequency relation in the spread spectrum receiver apparatus shown in Fig. 12. Furthermore, Fig. 14 is a spectrum chart for explaining other frequency relation according to a modification of the spread spectrum receiver apparatus shown in Fig. 12. The spread spectrum receiver apparatus according to the third embodiment is characterized, as compared with the first embodiment shown in Fig.1, in that a circuit in front of an adder 102 is constituted by two frequency converters 201-1 and 201-2 and one local oscillator 202.

Referring to Fig. 12, radio signals that have carrier frequencies fRF1 and fRF2 and that are spread-spectrum modulated by different spreading codes by transmitters are received by antennas 200-1 and 200-2, and then inputted to frequency converters 201-1 and 201-2, respectively. The frequency converters 201-1 and 201-2 frequency-convert the radio signals into intermediate frequency signals having substantially the same intermediate frequency fIF, respectively. In this case, the frequency converter 201-1 is configured to include a band-pass filter 211-1, a low-noise high frequency amplifier 212-1, and a mixer 213-1. The frequency converter 201-2 is configured to include a band-pass filter 211-2, a low-noise high frequency amplifier 212-2, and a mixer 213-2. In the frequency converters 201-1 and 201-2, the band-pass filters 211-1 and 211-2 perform band-pass filtering on the radio signals received by the antennas 200-1 and 200-2 to extract frequency components of desired waves having the carrier frequencies fRF1 and fRF2, respectively. Thereafter, the resultant radio signals are outputted to the mixers 213-1 and 213-2 via the amplifiers 212-1 and 212-2, respectively, The mixers 213-1 and 213-2 mix and multiply the radio signals from the high-frequency amplifiers 212-1 and 212-2 by a single local oscillation signal generated by the local oscillator 202, and output the resultant signals to the adder 102, respectively. At this moment, a local oscillation frequency fLo of the local oscillator 202 is set to satisfy a relation expressed by one of the following Equations (4) and (5). It suffices to satisfy the relation expressed by the Equations (4) or (5) so that the spread spectrum receiver apparatus can perform spectrum despreading processing.

$$fLo = (fRF1 + fRF2)/2 \quad (4);$$

and

$$fLo = (fRF1 - fRF2)/2 \quad (5).$$

Fig. 13 shows the frequency relation expressed by the Equation (4). As shown in Fig. 13, the two radio signals having the carrier frequencies fRF1 and fRF2 are frequency-converted into the intermediate frequency signals having substantially the same intermediate frequency by the frequency converters 201-1 and 201-2, respectively. Further, Fig. 14 shows the frequency relation expressed by the Equation (5). As shown in Fig. 14, the two radio signals having the carrier frequencies fRF1 and fRF2 are frequency-converted into the intermediate frequency signals having substantially the same intermediate frequency by the frequency converters 201-1 and 201-2, respectively. It is to be noted that the operation after the adder 102 is the same as that according to the first embodiment.

As stated so far, according to the present embodiment, the radio signals spread-spectrum modulated and having two frequencies, respectively, can be frequency-converted into the intermediate frequency signals having substantially the same intermediate frequency by the single local oscillation signal from one local oscillator 202, respectively. Therefore, it is possible to simplify the configuration of the receiver apparatus and manufacture the receiver apparatus at low cost.

If the N radio signals received by the antennas 200-1 and 200-2 are spread-spectrum modulated by the transmitters so as to have two different bandwidths, respectively, pass band widths of pass bands of the band-pass filters 211-1 and 211-2 are preferably set to substantially coincide with a largest bandwidth out of the two bandwidths as shown in Fig. 3. This is similarly applicable to embodiments of spread spectrum receiver apparatuses including the band-pass filters 211-1 and 211-2 or 311-1 and 311-2 to be described later.

In the third embodiment stated so far, the oscillation frequency fLo of the local oscillator 202 is set to be half or substantially half of the difference or sum between the two carrier frequencies fRF1 and fRF2 so as to mix the radio signals using secondary nonlinearities of the respective mixers 213-1, and 213-2. However, the present invention is not limited to this. In order to mix the radio signals using, for example, tertiary nonlinearities of the respective mixers 213-1 and 213-2, the oscillation frequency fLo may be set to a value such as 2xfRF1-fRF2 or 2xfRF2-fRF1, which is similarly applicable to a fourth embodiment to be described below.

FOURTH EMBODIMENT

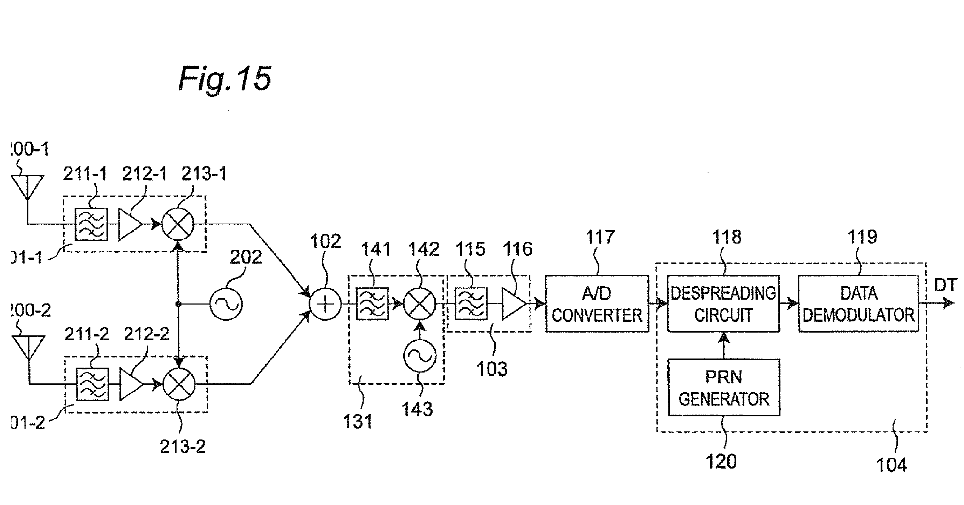

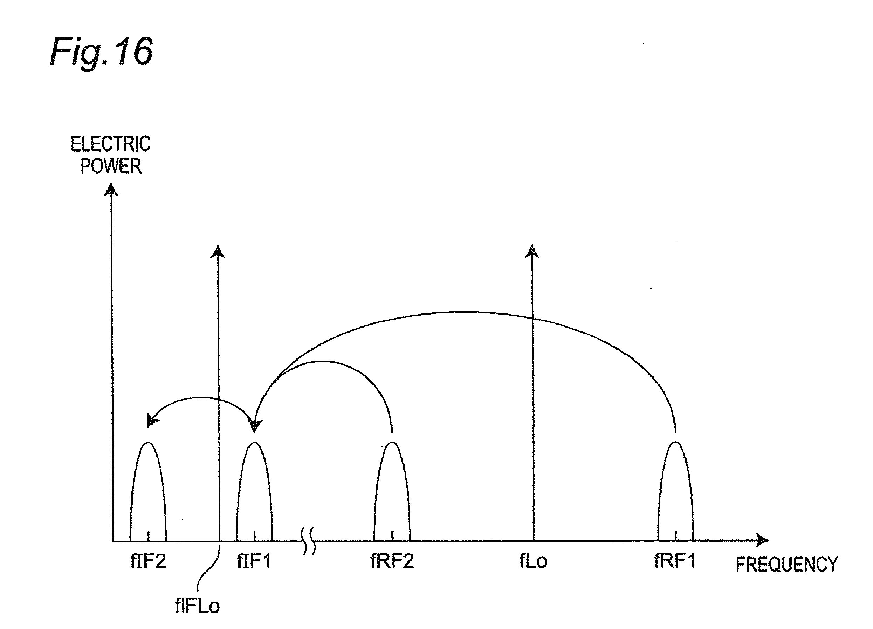

Fig. 15 is a block diagram showing a configuration of a spread spectrum receiver apparatus according to the fourth embodiment of the present invention. Fig. 16 is a spectrum chart for explaining frequency relation in the spread spectrum receiver apparatus shown in Fig. 15. The fourth embodiment is characterized in that the spread spectrum receiver apparatus according to the third embodiment shown in Fig. 12 further includes another frequency converter 131 in a manner similar to that of the second embodiment shown in Fig. 9.

In the third embodiment shown in Fig. 12, the oscillation frequency of the local oscillator 202 is determined by the two carrier frequencies. Therefore, in case of the L1 spectrum (1575.42 MHz) and the L2 spectrum (1227.6 MHz) for the GPS, for example, a local oscillation frequency fLo of a local oscillator 202 is 1401.51 MHz and an intermediate frequency fIF is 173.91 MHz if the local oscillation frequency fLo satisfies the Equation (4). The local oscillation frequency fLo of the local oscillator 202 is 173.91 MHz and the intermediate frequency fIF is 1401.51 MHz if the local oscillation frequency fLo satisfies the Equation (5). Generally speaking, if an A/D converter 117 performs oversampling, it is necessary to set a sampling frequency to be twice or more of an input frequency. Due to this, if the A/D converter 117 performs A/D conversion with the above-stated intermediate frequency, current consumption is disadvantageously increased. In order to solve this problem, the spread spectrum receiver apparatus according to the third embodiment shown in Fig. 15 is provided. Referring to Fig. 15, another frequency converter 131 operates in a manner similar to that of the frequency converter 131 shown in Fig. 9. As shown in Fig. 16, two radio signals having carrier frequencies fRF1 and fRF2, respectively are frequency-converted into first intermediate frequency signals having a first intermediate frequency fIF1 by a local oscillation signal having the local oscillation frequency fLo. Thereafter, the first intermediate frequency signal is further frequency-converted into a second intermediate frequency signal having a 21-st intermediate frequency fIF2 by the local oscillation signal having a local oscillation frequency f1Lo.

In the fourth embodiment configured as stated above, the intermediate frequency fIF is further converted by another frequency converter 131 to further lower the intermediate frequency. Then it is possible to reduce processing capabilities (or particularly processing capabilities for processing higher frequencies) of the A/D converter 117 and a receiving processor 104. Therefore, power consumption can be reduced as compared with the third embodiment.

Moreover, according to the present embodiment, in a manner similar to that of the third embodiment, the radio signals spread-spectrum modulated and having two frequencies, respectively, can be frequency-converted into the intermediate frequency signals having substantially the same intermediate frequency by the single local oscillation frequency from one local oscillator 202. Therefore, it is possible to simplify the configuration of the receiver apparatus and manufacture the receiver apparatus at low cost.

FIFTH EMBODIMENT

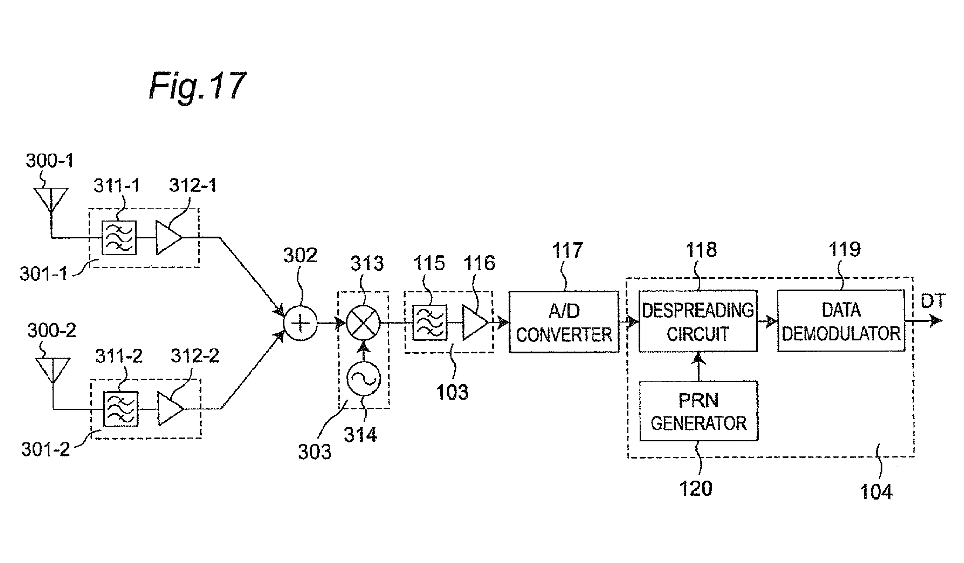

Fig. 17 is a block diagram showing a configuration of a spread spectrum receiver apparatus according to a fifth embodiment of the present invention. In the third embodiment shown in Fig. 12, the two mixers 213-1 and 213-2 frequency-convert the respective radio signals in front of the adder 102. The fifth embodiment shown in Fig. 17 is characterized in that a frequency converter 303 in rear of an adder 302 frequency-converts a radio signal obtained by addition.

Referring to Fig. 17, radio signals, spread-spectrum modulated by transmitters, having carrier frequencies fRF1 and fRF2, and received by antennas 300-1 and 300-2, are inputted to and amplified by high-frequency amplifier units 301-1 and 301-2, respectively. The high-frequency amplifier unit 301-1 is configured to include a band-pass filter 311-1 and a low-noise high frequency amplifier 312-1. The high-frequency amplifier unit 301-2 is configured to include a band-pass filter 311-2 and a low-noise high frequency amplifier 312-2. In the high-frequency amplifier units 301-1, and 301-2, the band-pass filters 311-1 and 311-2 perform band-pass filtering on the radio signals received by the antennas 300-1 and 300-2 to extract frequency components of desired waves, and the high frequency amplifiers 312-1 and 312-2 amplify the resultant radio signals, respectively. Thereafter, the resultant radio signals are outputted to the adder 302. The adder 302 adds and combines the two inputted radio signals, and the combined radio signal is then outputted to the frequency converter 303. The frequency converter 303 is configured to include a local oscillator 314 and a mixer 313. The combined radio signal from the adder 302 and a local oscillation signal from the local oscillator 314 are mixed to be added up to generate an intermediate frequency signal, and the intermediate frequency signal is supplied to an analog signal processor 103.

In the present embodiment, a local oscillation frequency fLo of the local oscillator 314 is set to satisfy a relation expressed by one of the above Equations (4) and (5) and the local oscillation signal is oscillated. The operation after the analog signal processor 103 is the same as that according to the first embodiment. Furthermore, the frequency relation at this moment is the same as that shown in Figs. 13 and 14 to correspond to a relation expressed by one of the above Equation (4) or (5).

As stated so far, in the spread spectrum receiver apparatus according to the present embodiment, the radio signals spread-spectrum modulated and having two frequencies, respectively, can be frequency-converted by the frequency converter 303 including one mixer 313 and one local oscillator 314. Therefore, it is possible to simplify the configuration of the receiver apparatus and manufacture the receiver apparatus at low cost.

SIXTH EMBODIMENT

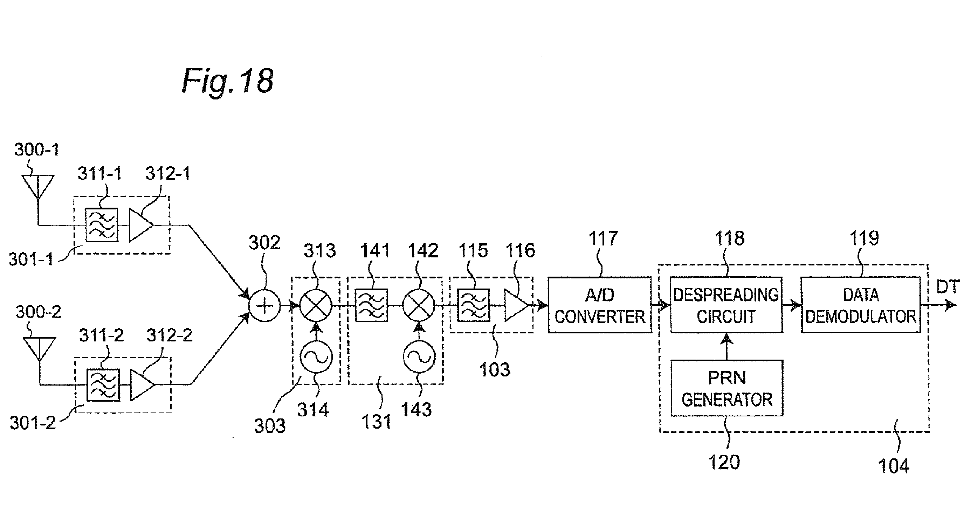

Fig. 18 is a block diagram showing a configuration of a spread spectrum receiver apparatus according to a sixth embodiment of the present invention. The sixth embodiment is characterized in that the spread spectrum receiver apparatus according to the fifth embodiment shown in Fig. 17 includes another frequency converter 131 having a configuration similar to that of the second embodiment shown in Fig. 9 and being interposed between a frequency converter 303 and an analog signal processor 103. In the sixth embodiment configured as stated above, a first intermediate frequency signal having an intermediate frequency fIF is further frequency-converted into a second intermediate frequency signal having an intermediate frequency f1IF by the frequency converter 131 to lower the intermediate frequency. Then it is possible to reduce processing capabilities (or particularly processing capabilities for processing signals with higher frequencies) of the A/D converter 117 and a receiving processor 104. Therefore, power consumption can be reduced as compared with the fifth embodiment.

SEVENTH EMBODIMENT

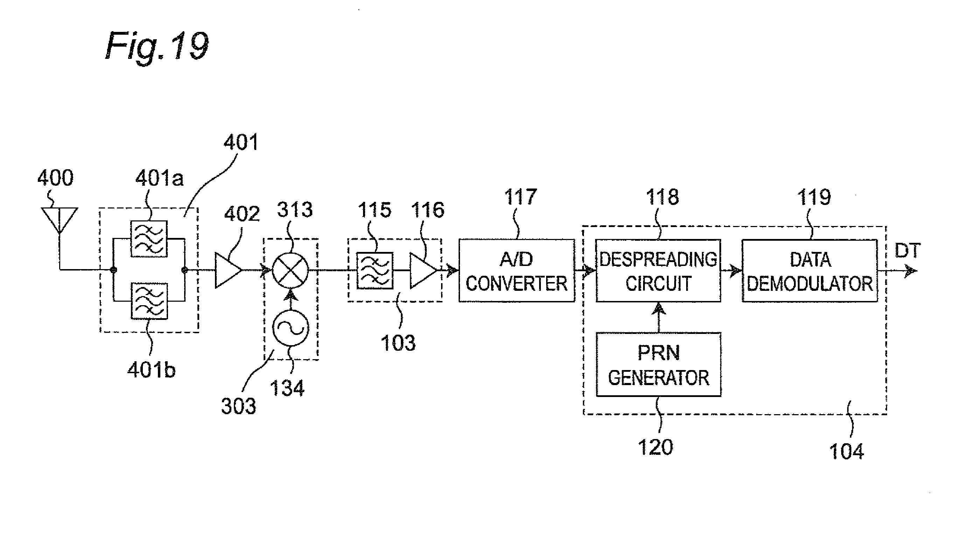

Fig. 19 is a block diagram showing a configuration of a spread spectrum receiver apparatus according to a seventh embodiment of the present invention. The seventh embodiment is characterized, as compared with the fifth embodiment shown in Fig. 17, in that systems for processing received signals from an antenna 400 to a frequency converter 303 are realized by one processing system.

Referring to Fig. 19, two radio signals, spread-spectrum modulated by transmitters and having carrier frequencies fRF1 and fRF2, respectively, are received by one antenna 400, and then inputted to a band-pass filter circuit 401 that includes two band-pass filters 401a and 401b. In this case, the band-pass filter 401a band-pass filters the radio signal having the carrier frequency fRF1 to extract only a component of a desired wave, and the resultant radio signal is outputted to the frequency converter 303 via a high frequency amplifier 402. Furthermore, the band-pass filter 401b band-pass filters the radio signal having the carrier frequency fRF2 to extract only a component of a desired wave, and the resultant radio signal is outputted to the frequency converter 303 via the high frequency amplifier 402. The operation after the frequency converter 303 is the same as that according to the fifth embodiment.

In the spread spectrum receiver apparatus configured as stated above, the radio signals that have been spread spectrum modulation and that have the two frequencies, respectively can be processed by a receiver circuit of one system including the band-pass filer circuit 401, the high frequency amplifier 402, the mixer 313, and the local oscillator 134. Therefore, as compared with the fifth embodiment shown in Fig. 17, circuit configuration can be greatly simplified and the spread spectrum receiver apparatus can be manufactured at low cost.

EIGHTH EMBODIMENT

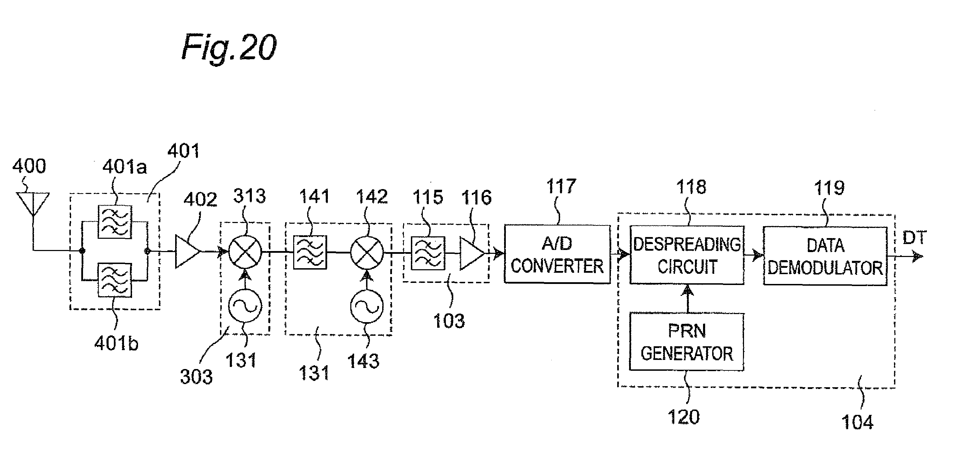

Fig. 20 is a block diagram showing a configuration of a spread spectrum receiver apparatus according to an eighth embodiment of the present invention. The eighth embodiment is characterized in that the spread spectrum receiver apparatus according to the seventh embodiment shown in Fig. 19 includes another frequency converter 131 that is similar in configuration to that according to the second embodiment shown in Fig. 9 and that is interposed between a frequency converter 303 and an analog signal processor 103. In the eighth embodiment configured as stated above, a first intermediate frequency signal having an intermediate frequency fIF is further converted into a second intermediate frequency signal having an intermediate frequency f1IF by the frequency converter 131 to lower the intermediate frequency. Then it is possible to reduce processing capabilities (or particularly processing capabilities for processing signals with higher frequencies) of the A/D converter 117 and a receiving processor 104, Therefore, power consumption can be reduced as compared with the seventh embodiment.

NINTH EMBODIMENT

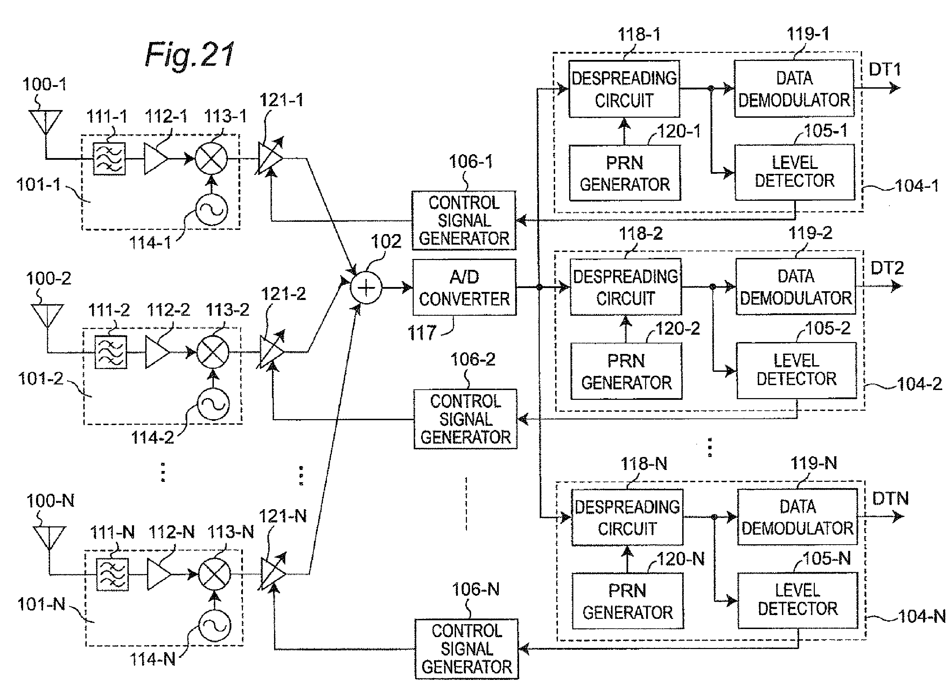

Fig. 21 is a block diagram showing a configuration of a spread spectrum receiver apparatus according to a ninth embodiment of the present invention. The ninth embodiment differs from the first modification of the first embodiment in which the parallel receiver circuit 104A shown in Fig. 4 is applied to the first embodiment shown in Fig. 1 in the following respects. It is to be noted that characteristics of the ninth embodiment related to the differences of the ninth embodiment may be applied to the other embodiments.

(1) Each receiving processor 104-n includes a level detector 105-n that detects a level of a digital signal outputted from a despreading circuit 118-n and that outputs a level signal indicating the detected level.
(2) A variable gain amplifier 121-n is provided between a mixer 113-n of each frequency converter 101-n and an adder 102.
(3) A control signal generator 106-n that generates a control signal to be transmitted to each variable gain amplifier 121-n so that reception sensitivities corresponding to respective carrier frequencies fRFn or levels of radio signals from the variable gain amplifiers 121-n becomes substantially identical with one another.

Referring to Fig. 21, a level of an intermediate frequency signal from each frequency converter 101-n is changed by each variable gain amplifier 121-n, and the level-changed intermediate frequency signal is outputted to the adder 102. The adder 102 adds and combines N inputted intermediate frequency signals, and outputs a combined intermediate frequency signal to each receiving processor 104-n via an A/D converter 117. The despreading circuit 118-n of each receiving processor 104-n performs spectrum despreading on the inputted digital signal to restore an original digital signal, and outputs the original digital signal to a data demodulator 119-n and the level detector 105-n. The level detector 105-n detects the level of the inputted digital signal, and outputs the level signal indicating the detected level to each control signal generator 106-n. In response to the level signal, the control signal generator 106-n generates a control signal to be transmitted to each variable gain amplifier 121-n so that the signal level detected by the level detector 105 becomes a predetermined level.
On the other hand, radio signals having different carrier frequencies and having been spread-spectrum modulated differ in transmission loss due to the difference in carrier frequency among them. Generally speaking, free-space propagation loss r is expressed by the following Equation (6):
$$\Gamma = (4\pi d / \lambda)^2 \quad (6),$$

where d is a propagation distance (m) and $\lambda$ is a wavelength (m) of a radio signal. Furthermore, the relation between the wavelength $\lambda$ and the frequency is expressed by the following Equation (7):
$$\lambda = 3 \times 10^8 / f \quad (7).$$

As apparent from the Equations (6) and (7), the propagation loss $\Gamma$ is larger if the frequency f is higher.
In this case, if gain differs among respective frequency bands, a signal in the frequency band having a higher gain causes a noise of signals in the other frequency bands, and this leads to degradation in the sensitivity. Further, the phenomenon occurs that only a specific frequency band having a higher gain has superior reception sensitivity. Therefore, in order to keep sensitivities of the respective frequency bands identical the spread spectrum receiver apparatus is configured so that the reception frequencies of the respective frequency bands are identical using the configuration shown in Fig. 21. Moreover, if the antenna 100-n is unable to receive a radio signal in a certain frequency band due to an interference wave, the gain of the variable amplifier 121-n corresponding to the frequency band to which the interference wave is inputted may be reduced so as to prevent signals in the other frequency bands from being interfered and collapsed.

In the present embodiment stated above, the variable gain amplifier 121-n changes the level of the intermediate frequency signal from each frequency converter 101-n. However, the present invention is not limited to this. The high frequency amplifier 12-n of each frequency converter 101-n may be configured as a variable gain amplifier, and a gain of the variable gain amplifier may be changed based on the control signal from the control signal generator 106-n.

In the ninth embodiment stated so far, the level detector 105-n is provided for every receiving processor 104-n. However, the present invention is not limited to this. For example, when one receiving processor 104 performs spectrum despreading on a plurality of baseband signals, spread-spectrum modulated by a time division method as described in the first embodiment shown in Fig. 1, the variable gain amplifiers 121-n may be controlled by a time division method,

TENTH EMBODIMENT

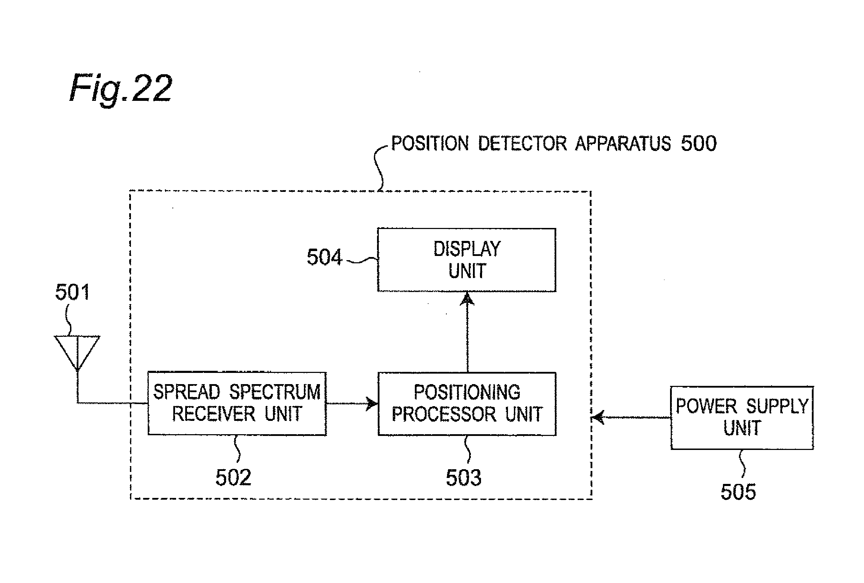

Fig. 22 is a block diagram showing a configuration of a position detector apparatus 500 according to a tenth embodiment of the present invention. The position detector apparatus 500 according to the tenth embodiment is configured to include an antenna 501, a spread spectrum receiver apparatus 502 according to each of the preceding embodiments, a positioning processor unit 503, and a display unit 504. Predetermined electric power is supplied to the position detector apparatus 500 from a power supply unit 505 such as a commercial power source or a rechargeable battery.

Referring to Fig. 22, radio signals of radio waves from GPS satellites received by the antenna 501 are inputted to the spread spectrum receiver apparatus 502. The spread spectrum receiver apparatus 502 receives the radio waves from four or more satellites in each of a plurality of carrier frequency bands such as the L1 spectrum, the L2 spectrum, and the L5 spectrum, demodulates navigation message data on each satellite, and outputs the demodulated navigation message data to the positioning processor unit 503. The positioning processor unit 503 calculates position information (including latitude and longitude) from the navigation message data obtained from each satellite. The position information calculated by the positioning processor unit 503 is displayed on the display unit 504.

In the present embodiment, the position information is acquired from the radio signals obtained by subjecting the carrier frequencies in a plurality of frequency bands to spread spectrum modulation, and delay time generated when the radio waves pass through the ionosphere with the different frequencies can be corrected. Therefore, accuracy for the correction can be improved and the position information with higher accuracy than that of position information obtained from a signal in a single frequency band can be obtained. Furthermore, by constituting the position detector apparatus 500 to be small in size using, for example, a battery or a rechargeable battery as the power supply unit 506, it is possible to constitute a portable position detector apparatus available in the outdoor.

ELEVENTH EMBODIMENT

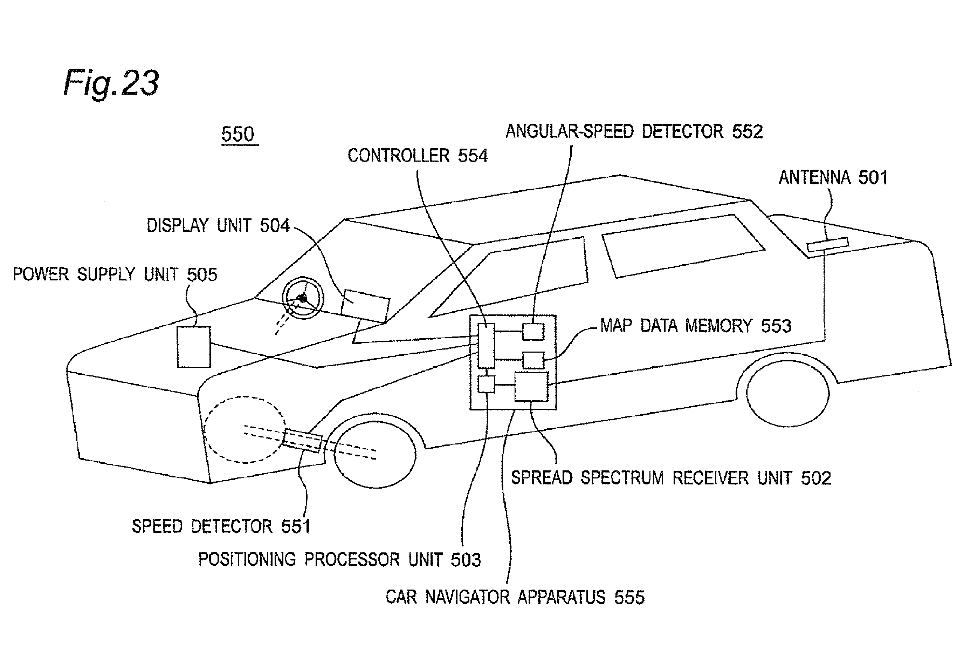

Fig. 23 is a block diagram showing a configuration of a vehicle 550, e.g., an automobile, in which a car navigation system that includes a car navigator apparatus 555 including a position detector apparatus 500 that includes a spread spectrum receiver apparatus 502 is installed, according to an eleventh embodiment of the present invention.

Referring to Fig. 23, the car navigator apparatus 555 includes an angular-speed detector 552, a map data memory 553, a controller 554, the spread spectrum receiver apparatus 502, and a positioning processor unit 503. The eleventh embodiment is characterized in that an antenna 501, a display unit 504, a power supply unit 505, and a speed detector 551 are connected to the car navigator apparatus 555, and this leads to constituting of the car navigation system. It is to be noted that the car navigation system employs the position detector apparatus 500 according to the tenth embodiment.

The car navigation system according to the present embodiment performs both position detection based on GPS navigation and position detection based on autonomous navigation, to detect a position of the moving vehicle 550 with higher accuracy.

In the position detection based on the autonomous navigation, it is necessary to obtain information on a traveling direction (an angular speed) of the vehicle 550 and a traveling speed of the vehicle 550. The speed information on the vehicle 550 is designed to be obtained from the speed detector 551 installed at a rotational shaft of a wheel of the vehicle 550, and the obtained speed information is outputted to the controller 554. Furthermore, the car navigation system includes the angular-speed detector 552 for the position detection based on the autonomous navigation, and this angular-speed detector 552 detects the information on the traveling direction of the moving vehicle 550. As the angular-speed detector 552, a piezoelectric vibration gyroscope, for example, is employed. The piezoelectric vibration gyroscope detects rotation around a rotation-detection reference shaft by using change in a piezoelectric ceramic bonded to a vibrator because Coriolis force acts on the vibrator when the vehicle 550 makes a turn. The piezoelectric vibration gyroscope outputs a voltage proportional to the angular speed during the rotation. The angular-speed detector 552 detects the angular speed accompanying the change of direction of the vehicle by using such a piezoelectric vibration gyroscope, and outputs the output voltage that is a result of the detection to the controller 554 as an angular-speed signal.

The controller 554 calculates a travel distance and the traveling direction of the vehicle based on a speed signal obtained from the speed detector 551 and the angular-speed signal obtained from the angular-speed detector 552, and sequentially analyzes the travel distance and the traveling direction, to calculate a vehicle swept path. Moreover, the controller 554 calculates the position of the vehicle 550 based on the navigation message data on each GPS satellite demodulated by the spread spectrum receiver apparatus 502, and decides a maximum likelihood vehicle position from these two pieces of information.

Furthermore, the map data memory 553 configured by, for example, a DVD-ROM stores therein map data. The controller 554 reads information on this map data, generates a signal indicating superimposition of the detected position of the vehicle 550 on the map data, and outputs the signal to the display unit 524. A map representing the position of the vehicle 550 is then displayed on the display unit 524.

Such a car navigator apparatus can acquire the position information with higher accuracy because of calculation of the position based on the radio waves from the GPS satellites with two frequencies. Moreover, because of use of both the position detection based on the GPS and that based on the autonomous navigation, even if poor reception occurs to the position detector apparatus 500 using the GPS, it is possible to lessen deterioration in position detection accuracy at the time of the poor reception or the like by referring to information obtained when no poor reception occurs and reflecting the information in the position detection based on the autonomous navigation.

In the embodiment so far, the vehicle 550 such as an automobile has been described. However, the present invention is not limited to this. The car navigation system may be applied to the other moving or self-propelled transport apparatus such as a marine vessel or an aircraft.

In the above-stated embodiment and modification, the position detector apparatus using the GPS satellites has been described. However, the present invention is not limited to this. The position detector apparatus may measure the position information using radio waves from other satellites such as Galileo satellites and GloNass satellites or combinations thereof.

FIRST MODIFICATION OF THIRD EMBODIMENT

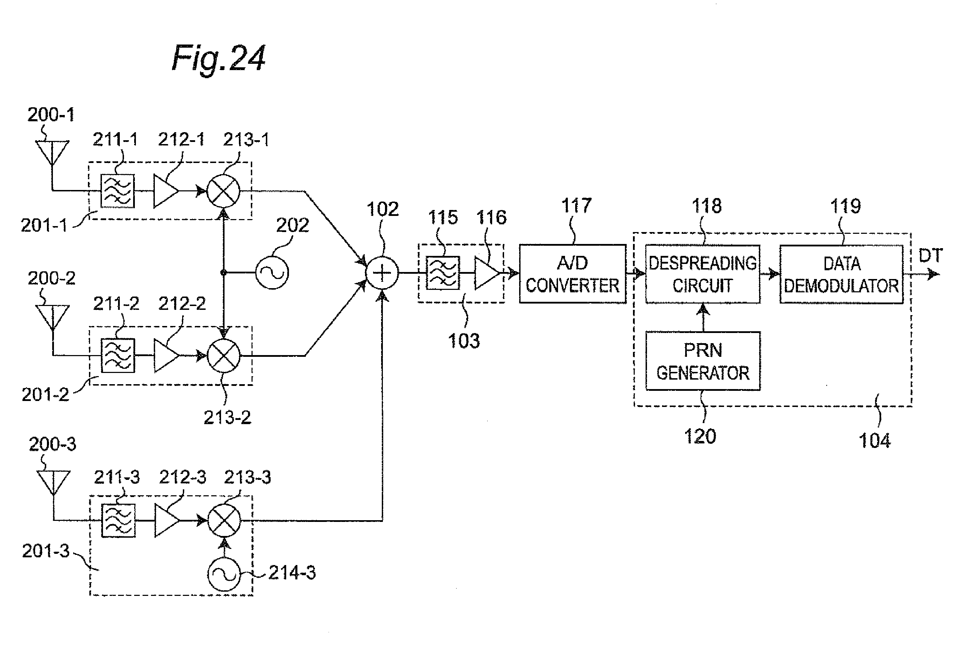

Fig. 24 is a block diagram showing a configuration of a spread spectrum receiver apparatus according to a first modification of the third embodiment of the present invention. The spread spectrum receiver apparatus according to the first modification of the third embodiment is characterized, as compared with the third embodiment shown in Fig. 12, by further including an antenna 200-3 and a frequency converter 201-3, The other constituent elements of the spread spectrum receiver apparatus are similar to those according to the third embodiment and will not be described in detail.

Referring to Fig. 24, a radio signal, spread-spectrum modulated by a transmitter with a different spreading code from those for radio signals received by frequency converters 201-1 and 201-2 and having a carrier frequency fRF3, is received by the antenna 200-3 and then inputted to the frequency converter 201-3. The frequency converter 201-3 frequency-converts the radio signal into an intermediate frequency signal having substantially the same intermediate frequency fIF with that of the other intermediate frequency signals. In this case, the frequency converter 201-3 is configured to include a band-pass filter 211-3, a low-noise high frequency amplifier 212-3, and a mixer 213-3. In the frequency converter 201-3, the band-pass filter 211-3 band-passes with respect to the radio signal received by the antenna 200-3 to extract only a component of a desired wave having the carrier frequency fRF3, and the amplifier 212-3 amplifies the resultant radio signal and outputs the amplified radio signal to the mixer 213-3. The mixer 213-3 combines and multiplies the radio signal from the high frequency amplifier 212-3 by a local oscillation signal generated by a local oscillator 214-3, and outputs a resultant radio signal to an adder 102. At this moment, an oscillation frequency fLo3 of the local oscillator 214-3 is set to satisfy a relation expressed by one of the following Equations (8) and (9). It is to be noted that a receiving processor 104 is configured to perform despreading on the radio signals spread-spectrum modulated using three different spreading codes, respectively:

$$fLo3 = fRF + fIF \quad (8);$$

and

$$fLo3 = fRF - fIF \quad (9).$$

As stated so far, according to the present embodiment, the radio signals spread-spectrum modulated and having two frequencies, respectively, can be frequency-converted into the intermediate frequency signals having substantially the same intermediate frequency by one local oscillation signal from one local oscillator 202. Therefore, the configuration of the receiver apparatus can be simplified and the receiver apparatus can be manufactured at low cost. Moreover, according to the present embodiment, the receiver apparatus further includes the antenna 200-3 and the frequency converter 201-3. Therefore, the third radio signal can be additionally received and demodulated. The spread spectrum receiver apparatus according to the first modification of the third embodiment further includes one signal processor including the antenna 200-3 and the frequency converter 201-3. Alternatively, if the spread spectrum receiver apparatus includes a plurality of signal processors, it is possible to receive and despread four or more radio signals spread-spectrum modulated with different spreading codes.

SECOND MODOFOCATION OF THIRD EMBODIMENT

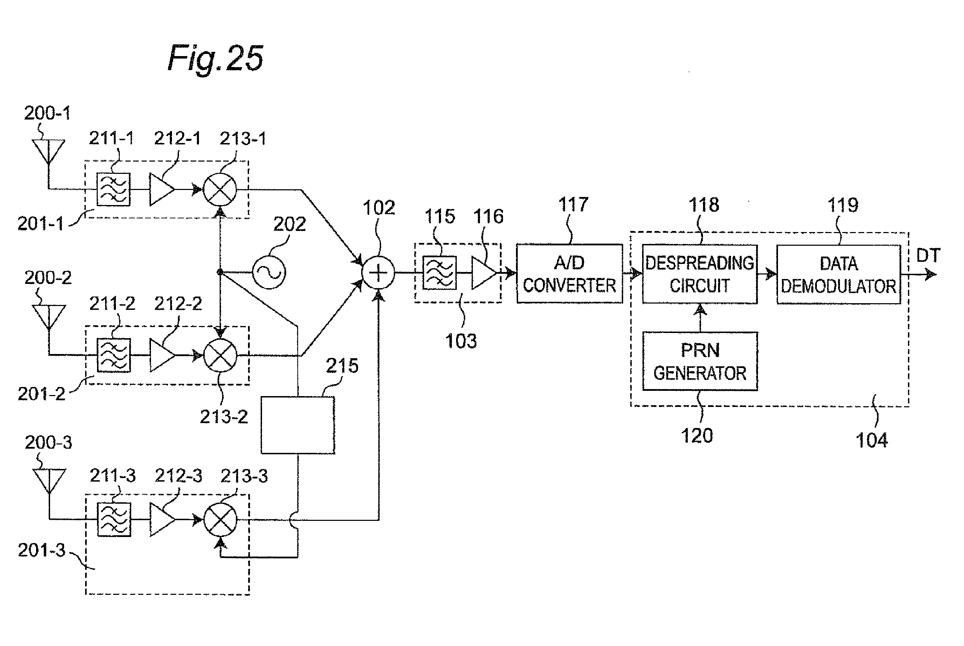

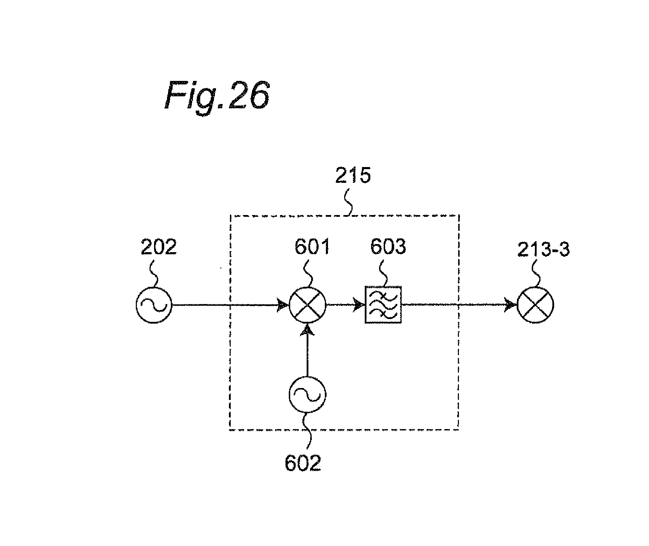

Fig. 25 is a block diagram showing a configuration of a spread spectrum receiver apparatus according to a second modification of the third embodiment of the present invention. The spread spectrum receiver apparatus according to the second modification of the third embodiment is characterized, as compared with the first modification of the third embodiment shown in Fig. 24, by including a frequency shifter 215 in place of the local oscillator 214-3. In this case, the frequency shifter 215 shifts a frequency of a local oscillation signal generated by a local oscillator 202 by only a predetermined frequency (which frequency corresponds to a frequency difference between the local oscillation signal from the local oscillator 202 and a local oscillation signal from the local oscillator 214-3), and outputs the frequency-shifted signal to a mixer 213-3 as a local oscillation signal. As the frequency shifter 215, a well-known frequency shifter using an acoustooptic device or the like or a frequency shifter having the configuration shown in Fig. 26 and using heterodyne method can be employed.

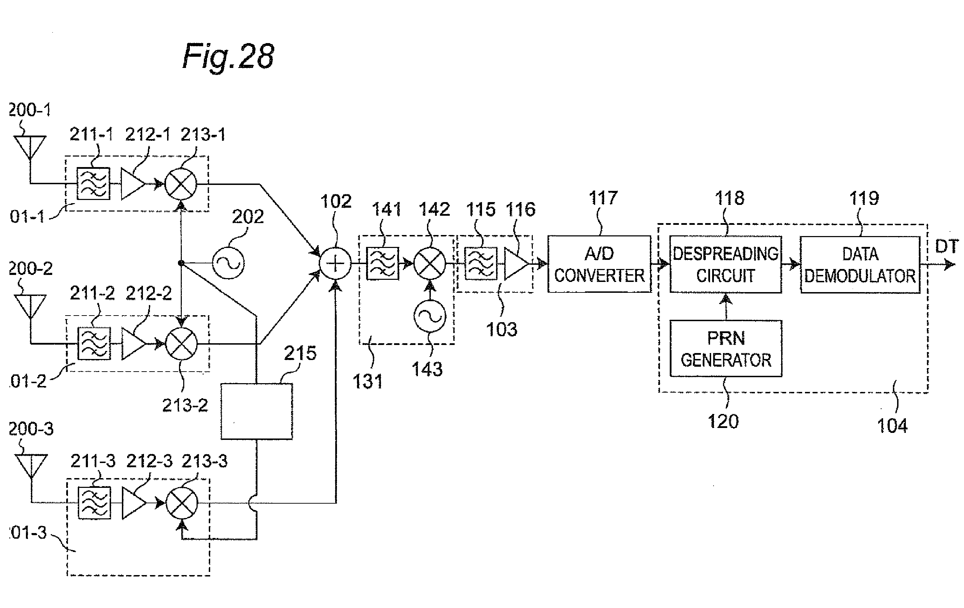

Fig. 26 is a block diagram showing a detailed configuration of the frequency shifter 215 shown in Figs. 25 and 28. Referring to Fig. 26, in the frequency shifter 215, the local oscillation signal from the local oscillator 202 is inputted to a mixer 601. The mixer 601 mixes up the inputted local oscillation signal and a local oscillation signal from a local oscillator 602 to multiply them by each other, passes a signal obtained as a result of the multiplication through a bandpass filter 603, and then, frequency-converts the signal into an intermediate frequency signal having a predetermined intermediate frequency fIF and outputs the intermediate frequency signal to the mixer 213-3. In this case, the local oscillation signal from the local oscillator 601 is set to have a frequency that is a sum or difference between a frequency of the local oscillation signal from the local oscillator 202 and the intermediate frequency fIF.

The spread spectrum receiver apparatus according to the second modification of the third embodiment configured as stated above exhibits the same functions and advantages as those of the first modification of the third embodiment.

FIRST MODIFICATION OF FOURTH EMBODIMENT

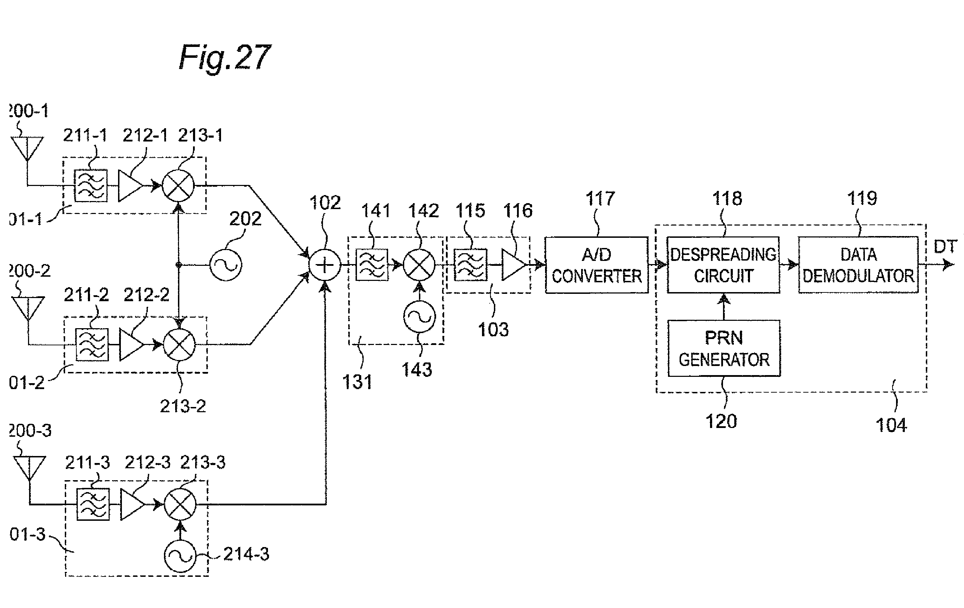

Fig. 27 is a block diagram showing a configuration of a spread spectrum receiver apparatus according to a first modification of the fourth embodiment of the present invention. The spread spectrum receiver apparatus according to the first modification of the fourth embodiment is characterized, as compared with the fourth embodiment shown in Fig. 15, by further including an antenna 200-3 and a frequency converter 201-3. Functions and advantages of the present modification are similar to those of the first modification of the third embodiment.

SECOND MODIFICATION OF FOURTH EMBODIMENT

Fig. 28 is a block diagram showing a configuration of a spread spectrum receiver apparatus according to a second modification of the fifth embodiment of the present invention. The spread spectrum receiver apparatus according to the second modification of the fourth embodiment is characterized, as compared with the first modification of the fourth embodiment shown in Fig. 27, by including a frequency shifter 215 in place of the local oscillator 214-3. Functions and advantages of the present modification are similar to those of the first modification of the fourth embodiment.

**EP 1 835 632 A1**

INDUSTRIAL APPLICABILITY

Accordingly, the spread spectrum receiver apparatus according to the present invention can simultaneously receive radio waves from GPS satellites having a plurality of different frequency bands, the configuration of the spread spectrum receiver apparatus according to the present invention is simpler than that according to the prior art, and the manufacturing cost of the spread spectrum receiver apparatus according to the present invention can be reduced. Furthermore, the position detector apparatus using the spread spectrum receiver apparatus and capable of detecting a position with higher accuracy than that of the position detector apparatus according to the prior art, and the transport apparatus using the position detector apparatus can be provided.

**Claims**

1. A spread spectrum receiver apparatus comprising:

   two first frequency converter means for converting two radio signals spread-spectrum modulated according to a spreading code and having two carrier frequencies different from each other, into intermediate frequency signals each having a substantially identical first intermediate frequency, using a single local oscillation signal having a local oscillation frequency calculated based on the two carrier frequencies, and outputting the first intermediate frequency signals, respectively;
   adder means for adding up the two intermediate frequency signals outputted from the two first frequency converter means, respectively, and outputting a first intermediate frequency signal combined as a result of the addition;
   analog to digital converter means for converting the intermediate frequency signal outputted from the adder means into a digital signal, and outputting the digital signal; and
   receiving processor means for despreading at least one digital signal included in the two radio signals using the spreading code based on the digital signal outputted from the analog to digital converter means, to demodulate the at least one digital signal to digital data, and output the digital data.

2. The spread spectrum receiver apparatus as claimed in claim 1,
   wherein the local oscillation frequency is one of substantially a half of a sum of the two carrier frequencies, and substantially a half of a difference between the two carrier frequencies.

3. The spread spectrum receiver apparatus as claimed in claim 1 or 2, further comprising second frequency converter means for converting one radio signal spread-spectrum modulated according to a spreading code and having a carrier frequency different from the carrier frequencies of the two radio signals, into an intermediate frequency signal having the substantially identical first intermediate frequency using a local oscillation signal having a predetermined oscillation frequency, and outputting the intermediate frequency signal,
   wherein the adder means adds up the three intermediate frequency signals outputted from the two first frequency converter means and the second frequency converter means, respectively.

4. The spread spectrum receiver apparatus as claimed in claim 3, further comprising frequency shifter means for shifting the frequency of the local oscillation signal used by the two first frequency converter means by a predetermined frequency,
   wherein the frequency-shifted local oscillation signal is used as the local oscillation signal used by the second frequency converter means.

5. The spread spectrum receiver apparatus as claimed in any one of claims 1 to 4, further comprising third frequency converter means, provided to be inserted between the adder means and the analog to digital converter means, for converting the intermediate frequency signal outputted from the adder means into an intermediate frequency signal having a second intermediate frequency different from the first intermediate frequency, and outputting the intermediate frequency signal having the second intermediate frequency to the analog to digital converter means.

6. The spread spectrum receiver apparatus as claimed in any one of claims 1 to 5,
   wherein each of the frequency converter means comprises:

   a filter for filtering the inputted radio signal(s) to extract a frequency component of a predetermined desired wave; and

17

a mixer for mixing up the radio signal outputted from the filter and the local oscillation signal, and outputting a mixed signal of the radio signal outputted from the filter and the local oscillation signal.

7. The spread spectrum receiver apparatus as claimed in any one of claims 1 to 6,
wherein each of the frequency converter means comprises variable gain amplifier means for changing a level of one of the intermediate frequency signal and the radio signal processed by each of the frequency converter means,
wherein the receiving processor means comprises level detector means for detecting a level of the digital signal corresponding to one of the radio signals, and
wherein the spread spectrum receiver apparatus further comprises control signal generator means for controlling each of the variable gain amplifier means so that levels of ones of the intermediate frequency signals and the radio signals processed by the respective frequency converter means are substantially equal to each other, based on the level of the digital signal corresponding to one of the radio signals and detected by the level detector means.

8. A spread spectrum receiver apparatus comprising:

two high-frequency amplifier means for amplifying two radio signals spread-spectrum modulated according to a spreading code and having two carrier frequencies different from each other, and outputting the two amplified radio signals, respectively;
adder means for adding up the two radio signals outputted from the two high-frequency amplifier means, and outputting a radio signal combined as a result of the addition;
first frequency converter means for converting the radio signal outputted from the adder means into an intermediate frequency signal having a substantially identical first intermediate frequency using a single local oscillation signal having a local oscillation frequency calculated based on the two carrier frequencies, and outputting the intermediate frequency signal;
analog to digital converter means for converting the intermediate frequency signal outputted from the first frequency converter means into a digital signal, and outputting the digital signal; and
receiving processor means for despreading at least one digital signal included in the two radio signals using the spreading code based on the digital signal outputted from the analog to digital converter means, to demodulate the at least one digital signal to digital data, and output the digital data.

9. The spread spectrum receiver apparatus as claimed in claim 8,
wherein the local oscillation frequency is one of substantially a half of a sum of the two carrier frequencies and substantially a half of a difference between the two carrier frequencies.

10. The spread spectrum receiver apparatus as claimed in claim 8 or 9, further comprising third frequency converter means, provided to be inserted between the frequency converter means and the analog to digital converter means, for converting the intermediate frequency signal outputted from the first frequency converter means into an intermediate frequency signal having a second intermediate frequency different from the first intermediate frequency, and outputting the intermediate frequency signal having the second intermediate frequency.

11. The spread spectrum receiver apparatus as claimed in any one of claims 8 to 10,
wherein each of the frequency converter means comprises variable gain amplifier means for changing a level of one of the intermediate frequency signal and the radio signal processed by each of the frequency converter means,
wherein the receiving processor means comprises level detector means for detecting a level of the digital signal corresponding to one of the radio signals, and
wherein the spread spectrum receiver apparatus further comprises control signal generator means for controlling each of the variable gain amplifier means so that levels of the intermediate frequency signals or the radio signals processed by the respective frequency converter means are substantially equal to each other, based on the level of the digital signal corresponding to one of the radio signals and detected by the level detector means.

12. The spread spectrum receiver apparatus as claimed in any one of claims 1 to 11,
wherein the plurality of radio signals include a plurality of digital signals spread-spectrum modulated using spreading codes different from one another, respectively, and
wherein the receiving processor means comprises a plurality of receiving processors for despreading the plurality of digital signals, to demodulate the plurality of digital signals to digital data.

13. The spread spectrum receiver apparatus as claimed in claim 5 or 10,
wherein the plurality of radio signals include a plurality of digital signals spread-spectrum modulated using a spreading code, respectively,
wherein the third frequency converter means comprises:

a filter for filtering the inputted intermediate frequency signal to extract a frequency component of a predetermined desired wave;
a local oscillator for generating a local oscillation signal having a predetermined local oscillation frequency; and
a mixer for mixing up the intermediate frequency signal outputted from the filter and the local oscillation signal, and outputting the mixed signal of the intermediate frequency signal outputted from the filter and the local oscillation signal, and

wherein a pass bandwidth of the filter is set to a maximum spreading bandwidth among spreading bandwidths of the plurality of intermediate frequency signals.

**14.** The spread spectrum receiver apparatus as claimed in claim 5 or 10, further comprising analog signal processor means, provided to be inserted between the third frequency converter means and the analog to digital converter means, for filtering the intermediate frequency signal outputted from the third frequency converter means to extract a frequency component of a predetermined desired wave, and amplifying a signal corresponding to the frequency component of the predetermined desired wave.

**15.** The spread spectrum receiver apparatus as claimed in claim 14,
wherein the plurality of radio signals is spread-spectrum modulated using spreading codes different from one another so as to have spreading bandwidths different from one another, and
wherein a pass bandwidth of the analog signal processor means is set to a maximum spreading bandwidth among spreading bandwidths of the plurality of radio signals.

**16.** The spread spectrum receiver apparatus as claimed in any one of claims 1 to 15,
wherein the plurality of radio signals include a plurality of digital signals spread-spectrum modulated using spreading codes different from one another, respectively, and
wherein the receiving processor means comprises a plurality of receiving processors each despreading the plurality of digital signals to demodulate the plurality of digital signals to digital data.

**17.** The spread spectrum receiver apparatus as claimed in claim 14,
wherein the plurality of radio signals are spread-spectrum modulated so as to have spreading bandwidths different from one another,
wherein the analog signal processor means and the analog to digital converter means are provided for each of the radio signals, and
wherein each band pass width of the analog signal processor means is set to a spreading bandwidth of each of the radio signals.

**18.** The spread spectrum receiver apparatus as claimed in any one of claims 1 to 17,
wherein the receiving processor means comprises:

a code generator for generating a spreading code identical with the spreading code used when one of the radio signals to be despreaded is spread-spectrum modulated;
a despreading circuit for despreading the inputted digital signal using the spreading code generated by the code generator; and
a data demodulator for demodulating the digital signal despreaded by the despreading circuit to the digital data.

**19.** A position detector apparatus comprising the spread spectrum receiver apparatus as claimed in any one of claims 1 to 18, the position detector apparatus comprising:

an antenna connected to the spread spectrum receiver apparatus, the antenna receiving each of the radio signals;
positioning means for measuring a position of the position detector apparatus based on digital data outputted from the spread spectrum receiver apparatus; and
display means for displaying the position measured by the positioning means.

**20.** A portable position detector apparatus comprising:

the position detector apparatus as claimed in claim 19; and
power supply means for supplying an electric power to the position detector apparatus.

**21.** The position detector apparatus as claimed in claim 20, further comprising:

speed detector means for detecting a speed of the position detector apparatus ;
angular-speed detector means for detecting a traveling direction of the position detector apparatus during movement; and
control means for performing both position detection based on autonomous navigation and position detection based on navigation of the position detector apparatus, and detecting the position of the position detector apparatus based on the speed detected by the position detector means and the traveling direction detected by the angular-speed detector means.

**22.** A moving transport apparatus comprising the position detector apparatus as claimed in claim 21.

**Amended claims under Art. 19.1 PCT**

**1.** A spread spectrum receiver apparatus comprising:

two first frequency converter means for converting two radio signals spread-spectrum modulated according to a spreading code and having two carrier frequencies different from each other, into intermediate frequency signals each having a substantially identical first intermediate frequency, using a single local oscillation signal having a local oscillation frequency calculated based on the two carrier frequencies, and outputting the first intermediate frequency signals, respectively;
adder means for adding up the two intermediate frequency signals outputted from the two first frequency converter means, respectively, and outputting a first intermediate frequency signal combined as a result of the addition;
analog to digital converter means for converting the intermediate frequency signal outputted from the adder means into a digital signal, and outputting the digital signal;
receiving processor means for despreading at least one digital signal included in the two radio signals using the spreading code based on the digital signal outputted from the analog to digital converter means, to demodulate the at least one digital signal to digital data, and output the digital data; and
second frequency converter means for converting one radio signal being spread-spectrum modulated according to a spreading code and having a carrier frequency different from the carrier frequencies of the two radio signals, into an intermediate frequency signal having the substantially identical first intermediate frequency using a local oscillation signal having a predetermined oscillation frequency, and outputting the intermediate frequency signal,

wherein the adder means adds up the three intermediate frequency signals outputted from the two first frequency converter means and the second frequency converter means, respectively.

**2.** The spread spectrum receiver apparatus as claimed in claim 1,
wherein the local oscillation frequency is one of substantially a half of a sum of the two carrier frequencies, and substantially a half of a difference between the two carrier frequencies.

**3.** Cancelled)

**4.** Amended) The spread spectrum receiver apparatus as claimed in claim 1, further comprising frequency shifter means for shifting the frequency of the local oscillation signal used by the two first frequency converter means by a predetermined frequency,
wherein the frequency-shifted local oscillation signal is used as the local oscillation signal used by the second frequency converter means.

**5.** Amended) The spread spectrum receiver apparatus as claimed in claim 1, further comprising third frequency converter means, provided to be inserted between the adder means and the analog to digital converter means, for converting the intermediate frequency signal outputted from the adder means into an intermediate frequency signal having a second intermediate frequency different from the first intermediate frequency, and outputting the intermediate frequency signal having the second intermediate frequency to the analog to digital converter means.

**6.** Amended) The spread spectrum receiver apparatus as claimed in claim 1,
wherein each of the frequency converter means comprises:

a filter for filtering the inputted radio signal(s) to extract a frequency component of a predetermined desired wave; and
a mixer for mixing up the radio signal outputted from the filter and the local oscillation signal, and outputting a mixed signal of the radio signal outputted from the filter and the local oscillation signal.

**7.** The spread spectrum receiver apparatus as claimed in claim 1,
wherein each of the frequency converter means comprises variable gain amplifier means for changing a level of one of the intermediate frequency signal and the radio signal processed by each of the frequency converter means,
wherein the receiving processor means comprises level detector means for detecting a level of the digital signal corresponding to one of the radio signals, and
wherein the spread spectrum receiver apparatus further comprises control signal generator means for controlling each of the variable gain amplifier means so that levels of ones of the intermediate frequency signals and the radio signals processed by the respective frequency converter means are substantially equal to each other, based on the level of the digital signal corresponding to one of the radio signals and detected by the level detector means.

**8.** 11. (Cancelled)

**12.** Amended) The spread spectrum receiver apparatus as claimed in claim 1,
wherein the plurality of radio signals include a plurality of digital signals being spread-spectrum modulated using spreading codes different from one another, respectively, and
wherein the receiving processor means comprises a plurality of receiving processors for despreading the plurality of digital signals, to demodulate the plurality of digital signals to digital data.

**13.** Amended) The spread spectrum receiver apparatus as claimed in claim 5,
wherein the plurality of radio signals include a plurality of digital signals being spread-spectrum modulated using a spreading code, respectively,
wherein the third frequency converter means comprises:

a filter for filtering the inputted intermediate frequency signal to extract a frequency component of a predetermined desired wave;
a local oscillator for generating a local oscillation signal having a predetermined local oscillation frequency; and
a mixer for mixing up the intermediate frequency signal outputted from the filter and the local oscillation signal, and outputting the mixed signal of the intermediate frequency signal outputted from the filter and the local oscillation signal, and

wherein a pass bandwidth of the filter is set to a maximum spreading bandwidth among spreading bandwidths of the plurality of intermediate frequency signals.

**14.** Amended) The spread spectrum receiver apparatus as claimed in claim 5, further comprising analog signal processor means, provided to be inserted between the third frequency converter means and the analog to digital converter means, for filtering the intermediate frequency signal outputted from the third frequency converter means to extract a frequency component of a predetermined desired wave, and amplifying a signal corresponding to the frequency component of the predetermined desired wave.

**15.** The spread spectrum receiver apparatus as claimed in claim 14,
wherein the plurality of radio signals is spread-spectrum modulated using spreading codes different from one another so as to have spreading bandwidths different from one another, and
wherein a pass bandwidth of the analog signal processor means is set to a maximum spreading bandwidth among spreading bandwidths of the plurality of radio signals.

**16.** 18. (Cancelled)

**19.** Amended) A position detector apparatus comprising the spread spectrum receiver apparatus as claimed in claim 1, the position detector apparatus comprising:

an antenna connected to the spread spectrum receiver apparatus, the antenna receiving each of the radio signals;

positioning means for measuring a position of the position detector apparatus based on digital data outputted from the spread spectrum receiver apparatus; and

display means for displaying the position measured by the positioning means.

20. A portable position detector apparatus comprising:

the position detector apparatus as claimed in claim 19; and

power supply means for supplying an electric power to the position detector apparatus.

21. The position detector apparatus as claimed in claim 20, further comprising:

speed detector means for detecting a speed of the position detector apparatus;

angular-speed detector means for detecting a traveling direction of the position detector apparatus during movement; and

control means for performing both position detection based on autonomous navigation and position detection based on navigation of the position detector apparatus, and detecting the position of the position detector apparatus based on the speed detected by the position detector means and the traveling direction detected by the angular-speed detector means.

22. A moving transport apparatus comprising the position detector apparatus as claimed in claim 21.

*Fig.1*

Fig.2

# Fig.3

ELECTRIC POWER

FREQUENCY RELATION IN FREQUENCY CONVERTER 101-N

FREQUENCY RELATION IN FREQUENCY CONVERTER 101-2

FREQUENCY RELATION IN FREQUENCY CONVERTER 101-1

fLon

fLo2

fLo1

PASS BAND OF BAND-PASS FILTER 115

FIF

fRFN

fRF2

fRF1

FREQUENCY

EP 1 835 632 A1

*Fig.4*

Fig.5

## Fig.6

## Fig.7

# Fig.8

ELECTRIC
POWER

PASS BAND OF
BAND-PASS FILTER 115-M

FREQUENCY

FIF

Fig.9

*Fig.10*

FREQUENCY RELATION IN INTERMEDIATE FREQUENCY CONVERTER 131

FREQUENCY RELATION IN INTERMEDIATE FREQUENCY CONVERTER 101-n

FILTERING CHARACTERISTIC OF BAND-PASS FILTER 111-n

ELECTRIC POWER

fIFLo

fLon

fIF2   fIF1        fIMG        fRFn        FREQUENCY

IMAGE INTERFEVENCE WAVE

EP 1 835 632 A1

*Fig.11*

*Fig.12*

EP 1 835 632 A1

*Fig.13*

ELECTRIC POWER

fIF   fRF2   fLo   fRF1   FREQUENCY

## Fig.14

ELECTRIC POWER

FREQUENCY

fLO, fRF2, fIF, fRF1

EP 1 835 632 A1

*Fig.15*

Fig.16

*Fig.17*

EP 1 835 632 A1

*Fig.18*

EP 1 835 632 A1

*Fig.19*

EP 1 835 632 A1

Fig.20

Fig.21

## Fig.22

POSITION DETECTOR APPARATUS 500

- 501
- 504 — DISPLAY UNIT
- SPREAD SPECTRUM RECEIVER UNIT
- 502
- POSITIONING PROCESSOR UNIT
- 503
- POWER SUPPLY UNIT
- 505

EP 1 835 632 A1

## Fig.23

550

CONTROLLER 554

ANGULAR-SPEED DETECTOR 552

ANTENNA 501

DISPLAY UNIT 504

POWER SUPPLY UNIT 505

MAP DATA MEMORY 553

SPREAD SPECTRUM RECEIVER UNIT 502

SPEED DETECTOR 551

POSITIONING PROCESSOR UNIT 503

CAR NAVIGATOR APPARATUS 555

EP 1 835 632 A1

Fig.24

EP 1 835 632 A1

*Fig.25*

*Fig.26*

## Fig.27

EP 1 835 632 A1

*Fig.28*

EP 1 835 632 A1

*Fig.29*

### INTERNATIONAL SEARCH REPORT

| International application No. |
| --- |
| PCT/JP2005/023361 |

A.  CLASSIFICATION OF SUBJECT MATTER
*H04B1/707*(2006.01), *G01S5/14*(2006.01)

According to International Patent Classification (IPC) or to both national classification and IPC

B.  FIELDS SEARCHED

Minimum documentation searched (classification system followed by classification symbols)
*H04B1/707*(2006.01), *G01S5/14*(2006.01)

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>A | JP 11-205043 A  (Hitachi, Ltd.),<br>30 July, 1999 (30.07.99),<br>Column 4, line 5 to column 5, line 29; Figs. 8, 9<br>(Family: none) | 1,2,5-7,<br>13-15,18-22<br>3,4,8-12,16,<br>17 |
| X<br>A | JP 5-300044 A  (NEC Corp.),<br>12 November, 1993 (12.11.93),<br>Full text; all drawings<br>(Family: none) | 8-22<br>1-7 |
| X<br>A | JP 10-200488 A  (Mitsubishi Electric Corp.),<br>31 July, 1998 (31.07.98),<br>Column 4, lines 2 to 27; Fig. 10<br>& JP 3474070 B2 | 8-22<br>1-7 |

|☒|  Further documents are listed in the continuation of Box C. | ☐ | See patent family annex. |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 14 February, 2006 (14.02.06) | 21 February, 2006 (21.02.06) |

| Name and mailing address of the ISA/<br>Japanese Patent Office | Authorized officer |
| --- | --- |
| Facsimile No. | Telephone No. |

Form PCT/ISA/210 (second sheet) (April 2005)

**INTERNATIONAL SEARCH REPORT**

| International application No. |
| --- |
| PCT/JP2005/023361 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,A | JP 2005-252861 A  (Toshiba Corp.), 15 September, 2005 (15.09.05), Full text; all drawings (Family: none) | 1-7,12-22 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003043126 A

- JP 2001028575 A